# EUROPEAN PATENT APPLICATION

(11) **EP 4 692 613 A1**
(43) Date of publication of application: **11.02.2026**
(21) Application number: 24795491.0
(22) Date of filing: 29.01.2024
(51) Int. Cl.: F16K 11/085, F16K 27/06, B60H 1/00, B60L 58/24, H01M 10/613

(54) **TEMPERATURE CONTROL SYSTEM, ENERGY STORAGE SYSTEM, VEHICLE AND MULTIPORT VALVE**

(30) Priority: 23.04.2023 CN 202320989179 U
(71) Applicant: Huawei Digital Power Technologies Co., Ltd., Shenzhen, Guangdong 518043 (CN)
(72) Inventor: HUANG, Tao, Shenzhen, Guangdong 518043 (CN); LI, Malin, Shenzhen, Guangdong 518043 (CN); MENG, Hao, Shenzhen, Guangdong 518043 (CN); WONG, Ming Fung, Shenzhen, Guangdong 518043 (CN)
(74) Representative: Gill Jennings & Every LLP
(86) International application number: PCT/CN2024/074386
(87) International publication number: WO 2024/222102

(57) **Abstract**

This application provides a temperature control system, a vehicle, an energy storage system, and a multi-way valve. The temperature control system includes an actuator, a plurality of liquid flow paths, and a multi-way valve. The multi-way valve includes a valve core and a valve seat. The valve core is cylindrical. The valve seat is sleeved on the valve core. An outer circumferential surface of the valve core is in contact with an inner circumferential surface of the valve seat. The outer circumferential surface of the valve core includes a plurality of axial grooves and a plurality of circumferential grooves. The inner circumferential surface of the valve seat includes a plurality of openings. Each opening is connected to one liquid flow path through an internal channel of the valve seat. The plurality of openings are arranged in an array and at intervals along a direction of a rotation axis of the valve core and a circumferential direction of the valve core. Each opening communicates with at least one another adjacent opening through one axial groove or one circumferential groove. The actuator is configured to drive the valve core to rotate around the rotation axis of the valve core in an inner hole of the valve seat. Any opening in the temperature control system in this application may be combined with at least one adjacent opening, to change a liquid flow path. Therefore, the temperature control system is characterized by a compact structure and a small size.

## Description

This application claims priority to Chinese Patent Application No. 202320989179.2, filed with the China National Intellectual Property Administration on April 23, 2023, and entitled "TEMPERATURE CONTROL SYSTEM, ENERGY STORAGE SYSTEM, VEHICLE, AND MULTI-WAY VALVE", which is incorporated herein by reference in its entirety.

### TECHNICAL FIELD

This application relates to the field of flow distribution system technologies, and specifically, to a temperature control system, an energy storage system, a vehicle, and a multi-way valve.

### BACKGROUND

With development of industries such as photovoltaic energy storage systems and new energy vehicles, complexity of temperature control systems gradually increases. For example, functional modules that are in an energy storage system and that may use a liquid flow path include cooling and heating of a battery, cooling of a converter, dehumidification of an energy storage compartment, and the like. In the automotive field, cooling of a motor, cooling and heating of a passenger compartment, and the like are also related. To control temperatures of different positions of an entire device by using one temperature control system, a multi-way valve usually needs to be disposed in a liquid cooling pipe of the temperature control system, to implement flow distribution or flow combination or adjust a flow path of liquid in a liquid flow path.

In a temperature control system in a conventional technology, to implement different heat exchange modes, a multi-way valve needs to be provided with a plurality of mutually independent flow channels and openings. Functions of each flow channel and opening are independent. This causes a large size of the multi-way valve and affects space arrangement of the temperature control system.

### SUMMARY

This application provides a temperature control system that has a compact structure, an energy storage system, a vehicle, and a multi-way valve. This application specifically includes the following solutions.

According to a first aspect, this application provides a temperature control system. The temperature control system includes an actuator, a plurality of liquid flow paths, and a multi-way valve. The multi-way valve includes a valve core and a valve seat. The valve core is cylindrical. The valve seat is sleeved on the valve core. An outer circumferential surface of the valve core is in contact with an inner circumferential surface of the valve seat. The actuator is configured to drive the valve core to rotate around a rotation axis of the valve core in an inner hole of the valve seat. The outer circumferential surface of the valve core includes a plurality of axial grooves and a plurality of circumferential grooves. Each axial groove extends along a direction of the rotation axis of the valve core. Each circumferential groove extends along a circumferential direction of the valve core. The plurality of axial grooves and the plurality of circumferential grooves are arranged at intervals. The inner circumferential surface of the valve seat includes a plurality of openings. Each opening is connected to at least one liquid flow path through an internal channel of the valve seat. The plurality of openings are arranged in an array form and at intervals along the direction of the rotation axis of the valve core and the circumferential direction of the valve core. Each opening communicates with another adjacent opening through one axial groove or one circumferential groove.

In the temperature control system in this application, the outer circumferential surface of the valve core is attached to and in contact with the inner circumferential surface of the valve seat, so that the openings on the inner hole of the valve seat can communicate with each other through grooves on an outer surface of the valve core. The grooves of the valve core include the axial grooves and the circumferential grooves. The openings of the valve seat are arranged in an array and at intervals along the rotation axis of the valve core and along the circumferential direction of the valve core. At least two adjacent openings arranged along the direction of the rotation axis of the valve core may communicate with each other through the axial groove, and at least two adjacent openings arranged along a circumferential direction of a second circumferential surface may communicate with each other through the circumferential groove. The temperature control system controls, by using the actuator, the valve core and the valve seat to rotate relative to each other, so that angles of the axial groove and the circumferential groove can be simultaneously changed, and a communication combination of the openings on the valve seat can be simultaneously changed. The temperature control system is configured with the openings and the internal channels in the valve seat, so that a function in which the liquid flow paths communicate with different modules of the temperature control system by using the multi-way valve can be implemented.

In the temperature control system in this application, the openings on the valve seat communicate with adjacent openings through the grooves of the valve core. The internal channels in the valve seat are connected to each other, so that the actuator can drive the valve core to rotate by a small angle, to change a flow path of each liquid flow path in the multi-way valve. The temperature control system in this application has a compact structure. This helps implement miniaturization.

In an implementation, the outer circumferential surface of the valve core includes at least two axial grooves. The at least two axial grooves are sequentially arranged adjacent to each other along the circumferential direction of the valve core. At least two adjacent openings communicate with each other through a same axial groove along the direction of the rotation axis of the valve core.

In an implementation, the plurality of openings include a plurality of columns of openings. Each column of openings includes at least two openings arranged at intervals along the direction of the rotation axis of the valve core. The plurality of columns of openings are sequentially arranged adjacent to each other along the circumferential direction of the valve core. At least two openings in each column of openings communicate with each other through a same axial groove.

In the foregoing two implementations, each column of openings of the valve seat is arranged along the direction of the rotation axis of the valve core, and each column of openings may communicate with each other through a same axial groove of the valve core.

In an implementation, the outer circumferential surface of the valve core includes at least two circumferential grooves. The at least two circumferential grooves are sequentially arranged adjacent to each other along the direction of the rotation axis of the valve core. At least two adjacent openings communicate with each other through a same circumferential groove along the circumferential direction of the valve core.

In an implementation, the plurality of openings are grouped into a plurality of layers of openings. Each layer of openings includes a plurality of openings arranged adjacent to each other along the circumferential direction of the valve core. The plurality of layers of openings are sequentially arranged adjacent to each other along the direction of the rotation axis of the valve core. At least two openings that are in each layer of openings and that are arranged adjacent to each other communicate with each other through a same circumferential groove.

In the foregoing two implementations, each layer of openings of the valve seat is arranged along the circumferential direction of the valve core, and each layer of openings may communicate with each other through a same circumferential groove of the valve core.

In an implementation, the outer circumferential surface of the valve core includes at least two circumferential grooves. The two circumferential grooves are arranged along the direction of the rotation axis of the valve core. The inner circumferential surface of the valve seat includes at least two columns of openings. Each column of openings includes two openings.

One opening in one column of openings communicates with one opening in an adjacent column of openings through one circumferential groove, and the other opening in the column of openings communicates with the other opening in the adjacent column of openings through the other circumferential groove.

In this implementation, the two circumferential grooves are arranged on the valve core along the direction of the rotation axis, so that the two circumferential grooves can fit with the two columns of openings, and four openings in the two columns of openings can communicate with each other through the two circumferential grooves.

In an implementation, the outer circumferential surface of the valve core includes two circumferential grooves and at least two axial grooves.

The two circumferential grooves are parallel and arranged adjacent to each other along the direction of the rotation axis of the valve core. The at least two axial grooves are parallel and arranged adjacent to each other along the circumferential direction of the valve core. One end of each circumferential groove is adjacent to one axial groove. The other end of each circumferential groove is adjacent to the other axial groove.

In an implementation, the inner circumferential surface of the valve seat includes eight openings. The eight openings are arranged in two layers along the direction of the rotation axis of the valve core, and four openings in each layer of openings are arranged in alignment along the circumferential direction of the valve core. The eight openings are arranged in four columns along the circumferential direction of the valve core, and two openings in each column of openings are arranged in alignment along the direction of the rotation axis of the valve core.

In this implementation, when the second circumferential surface of the valve seat is provided with the eight openings, two columns of openings may communicate with each other through the axial grooves of the valve core. The two circumferential grooves of the valve core may extend around a circumferential direction of a first circumferential surface and enable four openings in the two columns of openings to communicate with each other.

In an implementation, the valve core includes a central column, two cover plates, a plurality of vertical partition plates, and at least one horizontal partition plate. A length direction of the central column is parallel to the rotation axis of the valve core. The two cover plates are fastened at intervals to the central column along the length direction of the central column.

The vertical partition plate is fastened between the two cover plates along a direction perpendicular to the cover plate, and two adjacent vertical partition plates are constructed to form one axial groove between the two cover plates.

The horizontal partition plate is fastened to the central column along a direction parallel to the cover plate, the horizontal partition plate is located between the two cover plates and is separately spaced from the two cover plates, and the horizontal partition plate is constructed to form two circumferential grooves between the two cover plates.

In this implementation, the valve core is constructed by using the central column, the cover plate, the vertical partition plate, and the horizontal partition plate, and therefore has a simple structure and is easy to process. In addition, the cover plate, the vertical partition plate, and the horizontal partition plate are all in a plate shape. In this way, cross-sectional areas of the formed axial groove and circumferential groove are large. This increases a flow rate of liquid allowed to pass through the multi-way valve.

In an implementation, the cover plate is a circle, the central column is a cylinder, and a center line of the central column coincides with the rotation axis of the valve core. The vertical partition plate is a rectangle, and a sum of a radius of the central column and a length of a side that is of the vertical partition plate and that is connected to the cover plate is equal to a radius of the cover plate. The horizontal partition plate is a sector, and a sum of the radius of the central column and a sector radius of the horizontal partition plate is equal to the radius of the cover plate.

In this implementation, the sum of the length of the side that is of the vertical partition plate and that is connected to the cover plate and the radius of the central column is set to be equal to the radius of the cover plate, so that it can be ensured that the other side of the vertical partition plate is attached to the second circumferential surface. This ensures sealing performance of the axial groove. The sum of the sector radius of the horizontal partition plate and the radius of the central column is set to be equal to the radius of the cover plate, so that it can be ensured that an outer edge of the horizontal partition plate is attached to the second circumferential surface. This ensures sealing performance of the circumferential groove.

In an implementation, the valve core includes several support plates. Each support plate is connected between one cover plate and the horizontal partition plate. The support plates are configured to fasten relative positions of the cover plate and the horizontal partition plate. The support plate is provided with a penetrated through hole, to enable the circumferential grooves to communicate with each other.

In this implementation, because a radian of the horizontal partition plate is large, the support plates may be disposed to provide specific support effect for the horizontal partition plate, and the through hole provided on the support plate ensures communication between the circumferential grooves.

In an implementation, the temperature control system includes a radiator and a power pump. The power pump communicates with the radiator through at least one liquid flow path. The radiator communicates with the multi-way valve through at least one liquid flow path. The power pump communicates with the multi-way valve through at least one liquid flow path.

In this implementation, the power pump is disposed to communicate with the radiator, so that the power pump can be configured to provide power for the liquid flow path that communicates with the radiator and the multi-way valve, to enable coolant in the liquid flow path to flow into the radiator to form heat exchange and then flow back to the multi-way valve to enter another liquid flow path of the temperature control system.

In an implementation, the temperature control system includes an evaporator. The evaporator communicates with the multi-way valve through at least one liquid flow path.

In this implementation, the evaporator may be configured to provide heat exchange for the coolant in the liquid flow path, and enable the coolant that flows back to the multi-way valve through the evaporator to enter another liquid flow path of the temperature control system, to implement temperature control.

According to a second aspect, this application provides an energy storage system, including a battery pack, a converter, and the temperature control system provided in any one of the first aspect and the implementations of the first aspect. One liquid flow path exchanges heat with the battery pack, and another liquid flow path exchanges heat with the converter. The actuator is configured to control, based on a temperature of at least one of the battery pack or the converter, the multi-way valve to adjust a flow rate of at least one of the plurality of liquid flow paths. The energy storage system provided in the second aspect of this application uses the foregoing temperature control system with a small size and a compact structure. This facilitates space arrangement of the energy storage system and facilitates miniaturization of the energy storage system.

In an implementation, the temperature control system separately controls temperatures of the battery pack and the converter by using the multi-way valve, or the temperature control system connects the battery pack and the converter in series by using the multi-way valve, to synchronously control temperatures of the battery pack and the converter.

In an implementation, a power pump is disposed in a liquid flow path that is in the temperature control system and that is thermally attached to the battery pack.

In an implementation, the temperature control system controls the temperature of the battery pack by using the multi-way valve and the evaporator, or the temperature control system controls the temperature of the battery pack and the converter by using the multi-way valve, the radiator, and the evaporator, or the temperature control system enables, by using the multi-way valve, a liquid flow path that passes through the evaporator to short-circuit.

In the foregoing several implementations, the internal channels and openings in the valve seat of the multi-way valve are configured, so that the temperature control system can form a plurality of different working modes, to correspond to temperature control requirements of different modules when the energy storage system is in different external environment temperature scenarios.

According to a third aspect, this application provides a vehicle. The vehicle includes a motor, a battery pack, and the temperature control system provided in any one of the first aspect and the implementations of the first aspect. The battery pack is configured to supply power to the motor. One liquid flow path exchanges heat with the battery pack, and another liquid flow path exchanges heat with the motor. The actuator is configured to control, based on a temperature of at least one of the battery pack or the motor, the multi-way valve to adjust a flow rate of at least one of the plurality of liquid flow paths.

The vehicle provided in the third aspect of this application uses the temperature control system with a small size and a compact structure provided in embodiments of this application. This facilitates space arrangement of the vehicle and facilitates miniaturization of the vehicle.

According to a fourth aspect, this application provides a multi-way valve. The multi-way valve includes a valve core and a valve seat. The valve core is cylindrical. The valve seat is sleeved on the valve core. An outer circumferential surface of the valve core is in contact with an inner circumferential surface of the valve seat. An actuator is configured to drive the valve core to rotate around a rotation axis of the valve core in an inner hole of the valve seat. The outer circumferential surface of the valve core includes a plurality of axial grooves and a plurality of circumferential grooves. Each axial groove extends along a direction of the rotation axis of the valve core. Each circumferential groove extends along a circumferential direction of the valve core. The plurality of axial grooves and the plurality of circumferential grooves are arranged at intervals. The inner circumferential surface of the valve seat includes a plurality of openings. Each opening is connected to at least one liquid flow path through an internal channel of the valve seat. The plurality of openings are arranged in an array form and at intervals along the direction of the rotation axis of the valve core and the circumferential direction of the valve core. At least two adjacent openings communicate with each other through one axial groove or one circumferential groove.

The multi-way valve provided in the fourth aspect of this application may be used in a temperature control system, an energy storage system, or a vehicle. An opening of the valve seat communicates with an adjacent opening through a groove of the valve core, so that the multi-way valve has a compact structure and a small size.

### BRIEF DESCRIPTION OF DRAWINGS

FIG. 1 is a schematic of a principle framework of a temperature control system in an energy storage system according to an embodiment of this application;
FIG. 2 is a schematic of an interface of a multi-way valve in a temperature control system according to an embodiment of this application;
FIG. 3 is a schematic of a structure of a temperature control system running in a first heat exchange mode according to an embodiment of this application;
FIG. 4 is a schematic of a structure of a temperature control system running in a second heat exchange mode according to an embodiment of this application;
FIG. 5 is a schematic of a structure of a temperature control system running in a third heat exchange mode according to an embodiment of this application;
FIG. 6 is a schematic of a structure of a multi-way valve in a temperature control system according to an embodiment of this application;
FIG. 7 is a schematic exploded diagram of a structure of a multi-way valve in a temperature control system according to an embodiment of this application;
FIG. 8 is a schematic of a structure of a valve seat in a multi-way valve according to an embodiment of this application;
FIG. 9 is a schematic of a cross-sectional structure of a valve seat in a multi-way valve according to an embodiment of this application;
FIG. 10 is a schematic of another cross-sectional structure of a valve seat in a multi-way valve according to an embodiment of this application;
FIG. 11 is a schematic of a structure of a valve seat in a multi-way valve from another perspective according to an embodiment of this application;
FIG. 12 is a schematic of a structure of a multi-way valve in a temperature control system in another embodiment according to an embodiment of this application;
FIG. 13 is a schematic exploded diagram of a structure of a multi-way valve in a temperature control system in another embodiment according to an embodiment of this application;
FIG. 14 is a schematic of a structure of a valve core in a multi-way valve according to an embodiment of this application;
FIG. 15 is a schematic exploded diagram of a structure of a valve core in a multi-way valve according to an embodiment of this application;
FIG. 16 is a schematic of a cross-sectional structure of a valve core in a multi-way valve according to an embodiment of this application;
FIG. 17 is a schematic of a structure of a valve core and a valve seat in a multi-way valve at a fitting angle according to an embodiment of this application;
FIG. 18 is a schematic of a fitting structure of an axial groove of a valve core and an opening of a valve seat in a multi-way valve according to an embodiment of this application;
FIG. 19 is a schematic of a fitting structure of a circumferential groove of a valve core and an opening of a valve seat in a multi-way valve according to an embodiment of this application;
FIG. 20 is a schematic of a structure of a valve core in a multi-way valve in another embodiment according to an embodiment of this application;
FIG. 21 is a schematic of a structure of a valve core in a multi-way valve in still another embodiment according to an embodiment of this application;
FIG. 22 is a schematic of a connection structure of valve ports on a valve seat corresponding to a case in which a valve core and the valve seat in a multi-way valve are at a fitting angle according to an embodiment of this application;
FIG. 23 is a schematic of a structure of a valve core and a valve seat in a multi-way valve at another fitting angle according to an embodiment of this application;
FIG. 24 is a schematic of a connection structure of valve ports on a valve seat corresponding to a case in which a valve core and the valve seat in a multi-way valve are at another fitting angle according to an embodiment of this application;
FIG. 25 is a schematic of a structure of a valve core and a valve seat in a multi-way valve at still another fitting angle according to an embodiment of this application;
FIG. 26 is a schematic of a connection structure of valve ports on a valve seat corresponding to a case in which a valve core and the valve seat in a multi-way valve are at still another fitting angle according to an embodiment of this application;
FIG. 27 is a schematic of a structure of a valve core in a multi-way valve in yet another embodiment according to an embodiment of this application;
FIG. 28 is a schematic exploded diagram of a structure of a valve core in a multi-way valve in another embodiment according to an embodiment of this application;
FIG. 29 is a schematic of a plane structure of a valve core in a multi-way valve in another embodiment according to an embodiment of this application;
FIG. 30 is a schematic of plane arrangement of valve ports on a valve seat in a multi-way valve in another embodiment according to an embodiment of this application;
FIG. 31 is a schematic of a connection structure of a valve core and a valve seat in a multi-way valve at a fitting angle according to an embodiment of this application;
FIG. 32 is a schematic of a connection structure of valve ports on a valve seat corresponding to a case in which a valve core and the valve seat in a multi-way valve are at a fitting angle according to an embodiment of this application;
FIG. 33 is a schematic of a connection structure of a valve core and a valve seat in a multi-way valve at another fitting angle according to an embodiment of this application;
FIG. 34 is a schematic of a connection structure of valve ports on a valve seat corresponding to a case in which a valve core and the valve seat in a multi-way valve are at another fitting angle according to an embodiment of this application;
FIG. 35 is a schematic of a connection structure of a valve core and a valve seat in a multi-way valve at still another fitting angle according to an embodiment of this application;
FIG. 36 is a schematic of a connection structure of valve ports on a valve seat corresponding to a case in which a valve core and the valve seat in a multi-way valve are at still another fitting angle according to an embodiment of this application;
FIG. 37 is a schematic of a plane structure of a valve core in a multi-way valve in still another embodiment according to an embodiment of this application;
FIG. 38 is a schematic of a connection structure of a valve core and a valve seat in a multi-way valve at a fitting angle according to an embodiment of this application;
FIG. 39 is a schematic of a connection structure of a valve core and a valve seat in a multi-way valve at another fitting angle according to an embodiment of this application; and
FIG. 40 is a schematic of a connection structure of a valve core and a valve seat in a multi-way valve at another fitting angle according to an embodiment of this application.

### DESCRIPTION OF EMBODIMENTS

The following describes technical solutions in embodiments of this application with reference to accompanying drawings in embodiments of this application. It is clear that the described embodiments are merely some but not all of embodiments of this application. All other embodiments obtained by a person of ordinary skill in the art based on embodiments of this application without creative efforts shall fall within the protection scope of this application.

In this specification, the sequence numbers, such as "first" and "second", of components are merely intended to distinguish between the described objects, and do not have any sequential or technical meaning. Unless otherwise specified, the "connection" in this application includes a direct connection and an indirect connection. In the descriptions of this application, it should be understood that an orientation or a position relationship indicated by the terms "above", "below", "front", "back", "top", "bottom", "inside", "outside", and the like is based on an orientation or a position relationship shown in the accompanying drawings, and is merely intended for ease of describing this application and simplifying description, but does not indicate or imply that a described apparatus or element needs to have a specific orientation or be constructed and operated in a specific orientation. Therefore, such terms shall not be understood as a limitation on this application.

In this application, unless otherwise specified and limited, that a first feature is "above" or "below" a second feature may be that the first feature is in direct contact with the second feature, or the first feature is in indirect contact with the second feature through an intermediate medium. In addition, that the first feature is "above" or "over" the second feature may be that the first feature is right above or obliquely above the second feature, or merely mean that a horizontal height of the first feature is greater than that of the second feature. That the first feature is "below" or "under" the second feature may be that the first feature is right below or obliquely below the second feature, or merely mean that a horizontal height of the first feature is less than that of the second feature.

This application provides a temperature control system. The temperature control system includes an actuator, a plurality of liquid flow paths, and a multi-way valve. The multi-way valve includes a valve core and a valve seat. The valve core is cylindrical. The valve seat is sleeved on the valve core. An outer circumferential surface of the valve core is in contact with an inner circumferential surface of the valve seat. The actuator is configured to drive the valve core to rotate around a rotation axis of the valve core in an inner hole of the valve seat. The outer circumferential surface of the valve core includes a plurality of axial grooves and a plurality of circumferential grooves. Each axial groove extends along a direction of the rotation axis of the valve core. Each circumferential groove extends along a circumferential direction of the valve core. The plurality of axial grooves and the plurality of circumferential grooves are arranged at intervals. The inner circumferential surface of the valve seat includes a plurality of openings. Each opening is connected to at least one liquid flow path through an internal channel of the valve seat. The plurality of openings are arranged in an array form and at intervals along the direction of the rotation axis of the valve core and the circumferential direction of the valve core. Each opening communicates with another adjacent opening through one axial groove or one circumferential groove.

In the temperature control system in this application, the openings on the valve seat communicate with adjacent openings through the grooves of the valve core. The internal channels in the valve seat are connected to each other, so that the actuator can drive the valve core to rotate by a small angle, to change a flow path of each liquid flow path in the multi-way valve. The temperature control system in this application has a compact structure. This helps implement miniaturization.

This application further provides an energy storage system. The energy storage system includes a battery pack, a converter, and the temperature control system provided in any one of the foregoing embodiments. One liquid flow path exchanges heat with the battery pack, and another liquid flow path exchanges heat with the converter. The actuator is configured to control, based on a temperature of at least one of the battery pack or the converter, the multi-way valve to adjust a flow rate of at least one of the plurality of liquid flow paths. The energy storage system provided in this application uses the foregoing temperature control system with a small size and a compact structure. This facilitates space arrangement of the energy storage system and facilitates miniaturization of the energy storage system.

This application further provides a vehicle. The vehicle includes a motor, a battery pack, and the temperature control system provided in any one of the first aspect and the implementations of the first aspect. The battery pack is configured to supply power to the motor. One liquid flow path exchanges heat with the battery pack, and another liquid flow path exchanges heat with the motor. The actuator is configured to control, based on a temperature of at least one of the battery pack or the motor, the multi-way valve to adjust a flow rate of at least one of the plurality of liquid flow paths. The vehicle provided in this application uses the temperature control system with a small size and a compact structure provided in embodiments of this application. This facilitates space arrangement of the vehicle and facilitates miniaturization of the vehicle.

This application further provides a multi-way valve. The multi-way valve includes a valve core and a valve seat. The valve core is cylindrical. The valve seat is sleeved on the valve core. An outer circumferential surface of the valve core is in contact with an inner circumferential surface of the valve seat. An actuator is configured to drive the valve core to rotate around a rotation axis of the valve core in an inner hole of the valve seat. The outer circumferential surface of the valve core includes a plurality of axial grooves and a plurality of circumferential grooves. Each axial groove extends along a direction of the rotation axis of the valve core. Each circumferential groove extends along a circumferential direction of the valve core. The plurality of axial grooves and the plurality of circumferential grooves are arranged at intervals. The inner circumferential surface of the valve seat includes a plurality of openings. Each opening is connected to at least one liquid flow path through an internal channel of the valve seat. The plurality of openings are arranged in an array form and at intervals along the direction of the rotation axis of the valve core and the circumferential direction of the valve core. At least two adjacent openings communicate with each other through one axial groove or one circumferential groove. The multi-way valve provided in this application may be used in a temperature control system, an energy storage system, or a vehicle. An opening of the valve seat communicates with an adjacent opening through a groove of the valve core, so that the multi-way valve has a compact structure and a small size.

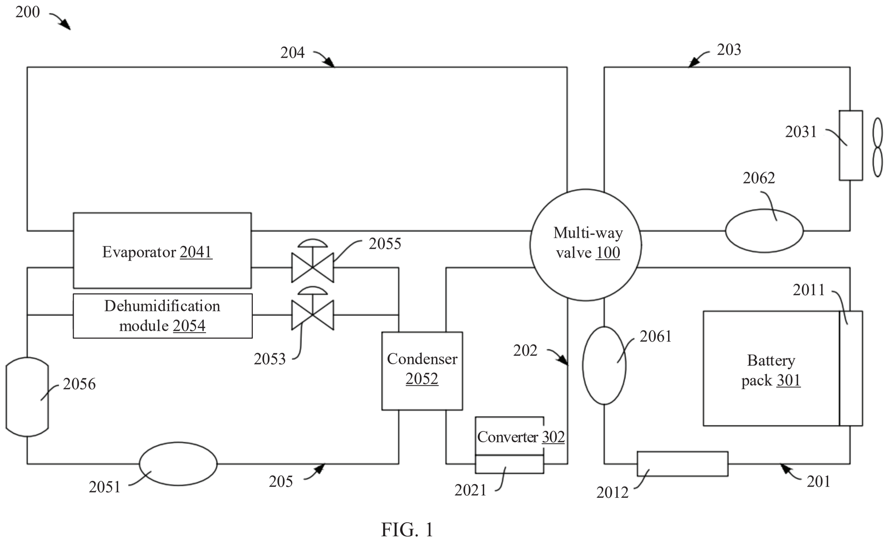

FIG. 1 is a schematic of a principle framework of a temperature control system 200 in an energy storage system according to an embodiment of this application.

As shown in FIG. 1, the energy storage system in this application includes a battery pack 301 and a temperature control system 200. The battery pack 301 is configured to store electric energy and release the stored electric energy when necessary. Heat is generated in a process in which the battery pack 301 stores and releases the electric energy. The battery pack 301 may be defined as a heating device in the energy storage system. The temperature control system 200 includes a multi-way valve 100 and a plurality of liquid flow paths. Each liquid flow path communicates with the multi-way valve 100. At least one liquid flow path (a heat dissipation plate 2011 of the battery pack in a temperature control loop 201 of the battery pack shown in FIG. 1) in the plurality of liquid flow paths is thermally attached to the battery pack 301 to form heat exchange. The temperature control system 200 dissipates heat for and cools the battery pack 301 through the temperature control loop 201 of the battery pack.

In some scenarios, when an external temperature is low, the temperature control system 200 further heats the battery pack 301 through the temperature control loop 201 of the battery pack, to ensure reliable working of the battery pack 301. In other words, the temperature control system 200 controls a temperature of the battery pack 301 through the temperature control loop 201 of the battery pack. The temperature control system 200 may dissipate heat for or heat the battery pack 301 based on an actual working scenario of the energy storage system, so that the battery pack 301 works under a suitable temperature condition. This improves reliability of the energy storage system.

For example, in the schematic in FIG. 1, the energy storage system includes a converter 302. The converter 302 may include a power conversion system (power conversion system, PCS) and/or a direct current-direct current (direct current-direct current, DC-DC) converter. The power conversion system and the direct current-direct current converter may be configured to separately control the battery pack 301 to work. The power conversion system and the direct current-direct current converter also generate heat in a working process. Therefore, the power conversion system and the direct current-direct current converter may also be defined as a heating device in the energy storage system.

Correspondingly, the plurality of liquid flow paths of the temperature control system 200 include a temperature control loop 202 of the converter. The temperature control loop 202 of the converter (a heat dissipation plate 2021 of the converter shown in FIG. 1) is thermally attached to the converter 302 (the power conversion system and/or the direct current-direct current converter). The temperature control system 200 further controls a temperature of the converter 302 through the temperature control loop 202 of the converter.

For example, in the schematic in FIG. 1, the plurality of liquid flow paths of the temperature control system 200 include a heat dissipation loop 203. A radiator 2031 is disposed in the heat dissipation loop 203. The radiator 2031 is configured to enable coolant flowing through the heat dissipation loop 203 to form heat exchange with external air, so that the coolant is cooled through heat dissipation or is heated through heat absorption. In the temperature control system 200, the heat dissipation loop 203 may communicate with the temperature control loop 201 of the battery pack or the temperature control loop 202 of the converter by using the multi-way valve 100. After heat of the battery pack 301 or the converter 302 is dissipated by using the coolant, a temperature of the coolant increases, and the coolant may flow into the heat dissipation loop 203 to be cooled, and then circulate to the temperature control loop 201 of the battery pack or the temperature control loop 202 of the converter. Alternatively, after the battery pack 301 or the converter 302 is heated by using the coolant, a temperature of the coolant decreases, and the coolant may flow into the heat dissipation loop 203 to absorb heat to be heated, and then circulate to the temperature control loop 201 of the battery pack or the temperature control loop 202 of the converter.

For example, in the schematic in FIG. 1, the plurality of liquid flow paths of the temperature control system 200 include an evaporator loop 204 and a compression refrigeration loop 205. The evaporator loop 204 communicates with the multi-way valve 100, and the compression refrigeration loop 205 is independent of the multi-way valve 100. A heat exchange working fluid is circulated in the compression refrigeration loop 205.

For example, in the schematic in FIG. 1, an evaporator 2041 is disposed in the evaporator loop 204. The evaporator 2041 further communicates with the compression refrigeration loop 205. The heat exchange working fluid in the compression refrigeration loop 205 and coolant in the evaporator loop 204 separately flow through the evaporator 2041. The heat exchange working fluid in the compression refrigeration loop 205 and the coolant in the evaporator loop 204 form heat exchange in the evaporator 2041. A temperature of the coolant in the evaporator loop 204 decreases or increases in the evaporator 2041. The temperature control system 200 controls the temperature of the battery pack 301 and/or the converter 302 by using the coolant in the evaporator loop 204 and by using the multi-way valve 100.

For example, in the schematic in FIG. 1, a compressor 2051 and a condenser 2052 are further disposed in the compression refrigeration loop 205. The compressor 2051 is configured to boost the heat exchange working fluid in the compression refrigeration loop 205, to improve heat exchange power of the compression refrigeration loop 205. In this way, the coolant in the evaporator loop 204 and the heat exchange working fluid in the compression refrigeration loop 205 can form more heat exchange, to implement a better heat dissipation or heating function for the coolant in the evaporator loop 204.

The condenser 2052 further communicates with the temperature control loop 202 of the converter. The heat exchange working fluid in the compression refrigeration loop 205 and coolant in the temperature control loop 202 of the converter separately flow through the condenser 2052. The heat exchange working fluid in the compression refrigeration loop 205 and the coolant in the temperature control loop 202 of the converter form heat exchange in the condenser 2052. A temperature of the coolant in the temperature control loop 202 of the converter decreases or increases in the condenser 2052. The temperature control system 200 further controls the temperature of the converter 302 by using the coolant in the temperature control loop 202 of the converter, and the temperature control system 200 may further control the temperature of the battery pack 301 by using the coolant in the temperature control loop 202 of the converter and by using the multi-way valve 100.

It should be noted that both the evaporator 2041 and the condenser 2052 communicate with the compression refrigeration loop 205. When a heat exchange working fluid in the evaporator 2041 is used to decrease the temperature of the coolant in the evaporator loop 204, a heat exchange working fluid in the condenser 2052 is used to increase the temperature of the coolant in the temperature control loop 202 of the converter. When the heat exchange working fluid in the evaporator 2041 is used to increase the temperature of the coolant in the evaporator loop 204, the heat exchange working fluid in the condenser 2052 is used to decrease the temperature of the coolant in the temperature control loop 202 of the converter.

In an embodiment, the compression refrigeration loop 205 is provided with a first throttle valve 2053. The first throttle valve 2053 is connected between the condenser 2052 and the evaporator 2041. The first throttle valve 2053 is configured to control a flow rate of the heat exchange working fluid in the compression refrigeration loop 205.

In an embodiment, the compression refrigeration loop 205 is provided with a dehumidification module 2054. The dehumidification module 2054 is connected in parallel to the evaporator 2041 and the first throttle valve 2053. The dehumidification module 2054 is configured to remove moisture from the heat exchange working fluid.

In an embodiment, the compression refrigeration loop 205 is further provided with a second throttle valve 2055. The second throttle valve 2055 is connected in series to the dehumidification module 2054, and then the second throttle valve 2055 and the dehumidification module 2054 are connected in parallel to the evaporator 2041 and the first throttle valve 2053. The second throttle valve 2055 is configured to control a flow velocity of the heat exchange working fluid in the dehumidification module 2054.

In an embodiment, the compression refrigeration loop 205 is provided with a gas-liquid separator 2056. The gas-liquid separator 2056 is disposed between the dehumidification module 2054 and the compressor 2051. The gas-liquid separator 2056 is configured to separate gas from liquid in the heat exchange working fluid, to discharge moisture from the heat exchange working fluid. This ensures normal working of the compression refrigeration loop 205.

In an embodiment, the temperature control system 200 includes a first power pump 2061. The first power pump 2061 is disposed in the temperature control loop 201 of the battery pack. The first power pump 2061 is configured to drive the coolant in the temperature control loop 201 of the battery pack to flow.

In an embodiment, the temperature control system 200 includes a second power pump 2062. The second power pump 2062 is disposed in the heat dissipation loop 203. In other words, the second power pump 2062 communicates with the radiator 2031 through the heat dissipation loop 203, the radiator 2031 communicates with the multi-way valve 100 through the heat dissipation loop 203, and the second power pump 2062 communicates with the multi-way valve 100 through the heat dissipation loop 203. The second power pump 2062 is configured to drive the coolant in the heat dissipation loop 203 to flow.

In an embodiment, the temperature control system 200 includes an electric heating module 2012. The electric heating module 2012 is disposed in the temperature control loop 201 of the battery pack. The electric heating module 2012 is configured to heat the coolant, to heat and increase the temperature of the battery pack 301 when an external temperature is low. This ensures reliable working of the battery pack 301.

Based on the foregoing embodiment, in the temperature control system 200 provided in this application, the temperature control loop 201 of the battery pack, the temperature control loop 202 of the converter, the heat dissipation loop 203, and the evaporator loop 204 separately communicate with the multi-way valve 100. The multi-way valve 100 may switch internal channels to change a connection manner of the liquid flow paths, so that the temperature control system 200 in this application runs in different heat exchange modes.

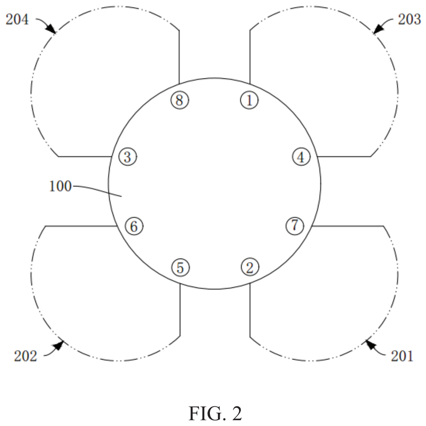

For example, FIG. 2 is a schematic of an interface of the multi-way valve 100 according to this application.

The multi-way valve 100 in this application may be an eight-way valve. The multi-way valve 100 includes eight valve ports from a first valve port 101 to an eighth valve port 108. The temperature control loop 201 of the battery pack communicates with a second valve port 102 and a valve port 107. The temperature control loop 202 of the converter communicates with a fifth valve port 105 and a sixth valve port 106. The heat dissipation loop 203 communicates with the first valve port 101 and a fourth valve port 104. The evaporator loop 204 communicates with a third valve port 103 and the eighth valve port 108.

Four flow channels are included inside the multi-way valve 100, and each flow channel communicates with two valve ports. The multi-way valve 100 controls the flow channels to rotate synchronously, so that the flow channels can communicate with different valve ports, and the connection manner of the liquid flow paths in the temperature control system 200 is changed.

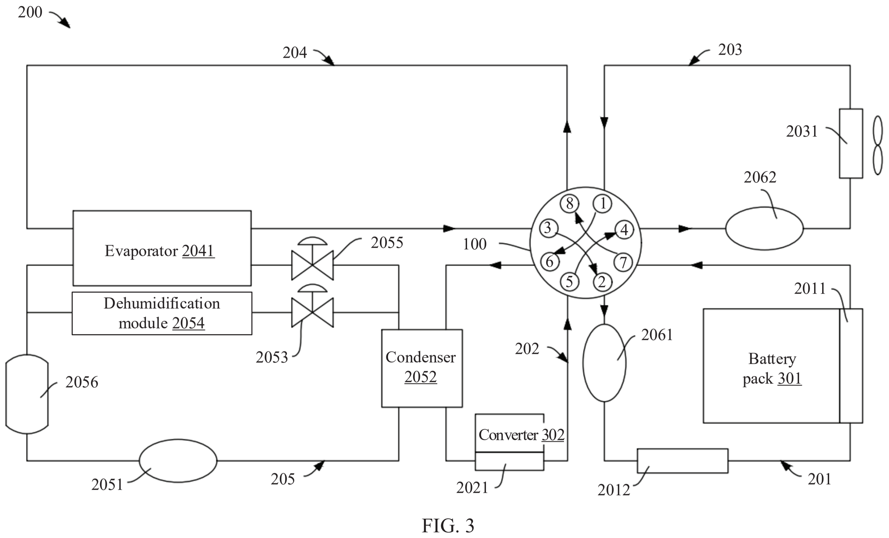

For example, FIG. 3 is a schematic of the temperature control system 200 running in a first heat exchange mode according to this application.

In this heat exchange mode, four flow channels in the multi-way valve 100 respectively communicate with the eighth valve port 108 and the seventh valve port 107, the second valve port 102 and the third valve port 103, the sixth valve port 106 and the first valve port 101, and the fourth valve port 104 and the fifth valve port 105.

In this way, the temperature control loop 201 of the battery pack communicates with the evaporator loop 204 to form a circulation loop. The circulation loop is powered by the first power pump 2061 for coolant to circulate. The temperature control loop 202 of the converter communicates with the heat dissipation loop 203 to form a circulation loop. The circulation loop is powered by the second power pump 2062 for coolant to circulate.

In the circulation loop formed when the temperature control loop 201 of the battery pack communicates with the evaporator loop 204, heat generated when the battery pack 301 works is taken away by the coolant in the temperature control loop 201 of the battery pack. The coolant whose temperature increases flows to the evaporator loop 204. In this case, the compressor 2051 runs, and the coolant in the evaporator loop 204 and the heat exchange working fluid in the compression refrigeration loop 205 form heat exchange in the evaporator 2041. The heat exchange working fluid cools the coolant. The cooled coolant flows back to the temperature control loop 201 of the battery pack and continues to cool the battery pack 301.

In the circulation loop formed when the temperature control loop 202 of the converter communicates with the heat dissipation loop 203, the coolant in the temperature control loop 202 of the converter first flows through the condenser 2052 in the compression refrigeration loop 205. The coolant exchanges heat with the heat exchange working fluid in the compression refrigeration loop 205 in the condenser 2052, and cools the heat exchange working fluid. After the temperature of the coolant increases, the coolant flows to the back-end converter 302. Because a working temperature of the converter 302 is high (usually, the working temperature may reach 50 degrees to 60 degrees), the coolant flowing out of the condenser 2052 can still form cooling effect for the converter 302.

After the temperature of the coolant further increases, the coolant flows to the heat dissipation loop 203. The coolant forms heat exchange with external air in the radiator 2031 in the heat dissipation loop 203 and is cooled. The cooled coolant flows back to the temperature control loop 202 of the converter and continues to cool the heat exchange working fluid in the condenser 2052 and the converter 302. The cooled heat exchange working fluid in the condenser 2052 flows to the evaporator 2041, and the cooled heat exchange working fluid is used to cool the coolant flowing through the evaporator 2041.

In this way, in this heat exchange mode, the battery pack 301 is cooled by using the compressor 2051, and the converter 302 is cooled by using the radiator 2031. The temperature control system 200 controls temperatures of the battery pack 301 and the converter 302 by using the multi-way valve 100, the radiator 2031, and the evaporator 2041. The temperature control system 200 controls the temperature of the converter 302 by using the multi-way valve 100 and the radiator 2031, and the temperature control system 200 further controls the temperature of the battery pack 301 by using the multi-way valve 100 and the evaporator 2041.

When the temperature control system 200 runs in the first heat exchange mode, a heat dissipation capability is strong. The heat exchange mode is applicable to a scenario in which an external temperature is high, for example, in summer and a tropical zone.

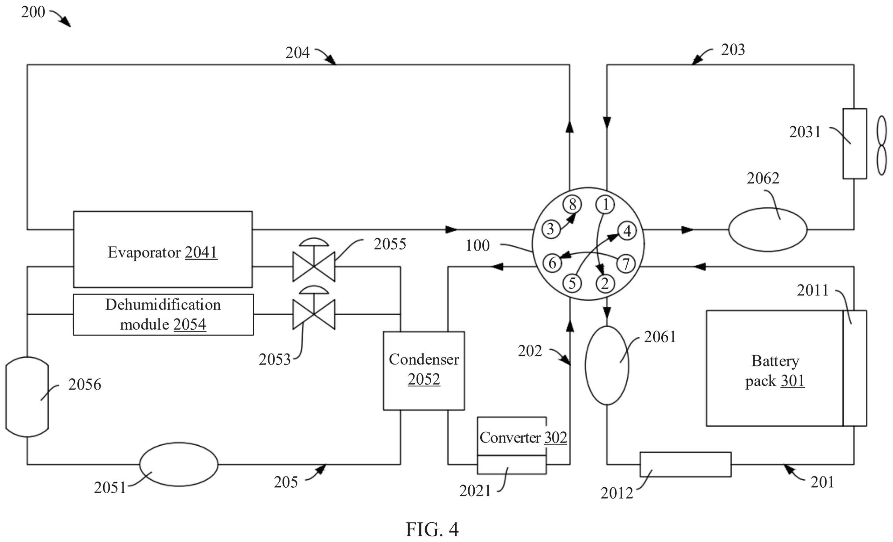

For example, FIG. 4 is a schematic of the temperature control system 200 running in a second heat exchange mode according to this application.

In this heat exchange mode, four flow channels in the multi-way valve 100 respectively communicate with the first valve port 101 and the second valve port 102, the fourth valve port 104 and the fifth valve port 105, the seventh valve port 107 and the sixth valve port 106, and the third valve port 103 and the eighth valve port 108.

In this way, the temperature control loop 201 of the battery pack, the temperature control loop 202 of the converter, and the heat dissipation loop 203 communicate with each other to form a circulation loop. The circulation loop is powered by the first power pump 2061 and/or the second power pump 2062 for coolant to circulate. The evaporator loop 204 is short-circuited by using the multi-way valve 100, and the coolant in the evaporator loop 204 does not flow.

In the circulation loop formed when the temperature control loop 201 of the battery pack, the temperature control loop 202 of the converter, and the heat dissipation loop 203 communicate with each other, heat generated when the battery pack 301 works is taken away by the coolant in the temperature control loop 201 of the battery pack. The coolant whose temperature increases flows to the temperature control loop 202 of the converter. Because a working temperature of the battery pack 301 is low (usually, the working temperature may reach 30 degrees to 40 degrees), the coolant flowing out of the temperature control loop 201 of the battery pack can still form cooling effect for the converter 302.

After the temperature of the coolant further increases, the coolant flows to the heat dissipation loop 203. The coolant forms heat exchange with external air in the radiator 2031 in the heat dissipation loop 203 and is cooled. The cooled coolant flows back to the temperature control loop 201 of the battery pack and continues to cool the battery pack 301.

In this heat exchange mode, the coolant in the evaporator loop 204 does not flow, the compressor 2051 in the compression refrigeration loop 205 does not work, and the heat exchange working fluid does not flow. When the coolant in the evaporator loop 204 does not flow, a flow path of the coolant in the temperature control system 200 is shortened. This reduces friction resistance of the coolant. The compressor 2051 stops working, and power consumption of the temperature control system 200 is also reduced. In the circulation loop formed when the temperature control loop 201 of the battery pack, the temperature control loop 202 of the converter, and the heat dissipation loop 203 communicate with each other, heat of the coolant is dissipated through natural air cooling of the radiator 2031. This further reduces the power consumption of the temperature control system 200.

When the temperature control system 200 runs in the second heat exchange mode, a heat dissipation capability is weak, but the power consumption is low. The heat exchange mode is applicable to a scenario in which an external temperature is moderate, for example, in spring, autumn, and a temperate zone.

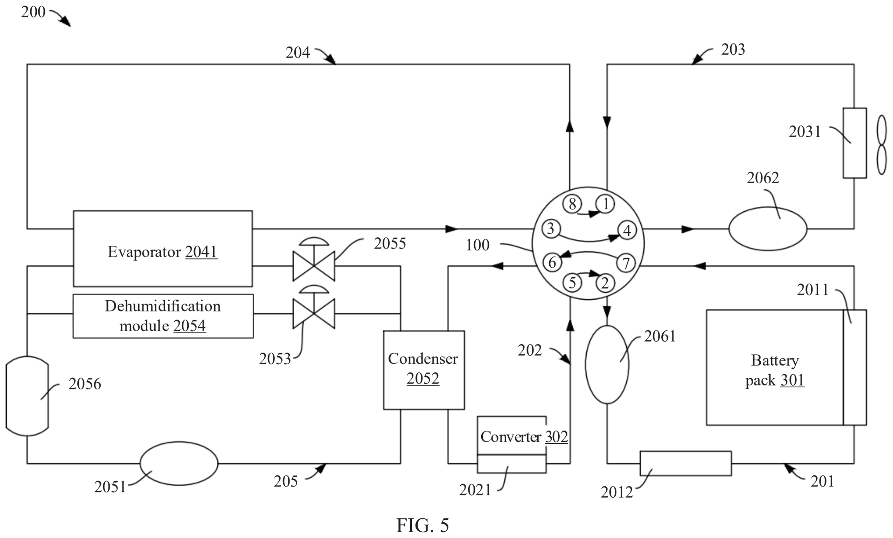

For example, FIG. 5 is a schematic of the temperature control system 200 running in a third heat exchange mode according to this application.

In this heat exchange mode, four flow channels in the multi-way valve 100 respectively communicate with the eighth valve port 108 and the first valve port 101, the fourth valve port 104 and the third valve port 103, the sixth valve port 106 and the seventh valve port 107, and the second valve port 102 and the fifth valve port 105.

In this way, the temperature control loop 201 of the battery pack communicates with the temperature control loop 202 of the converter to form a circulation loop. The circulation loop is powered by the first power pump 2061 for coolant to circulate. The evaporator loop 204 communicates with the heat dissipation loop 203 to form a circulation loop. The circulation loop is powered by the second power pump 2062 for coolant to circulate.

In this heat exchange mode, the temperature of the battery pack 301 is low, and the coolant is used to heat the battery pack 301.

Specifically, in the circulation loop formed when the temperature control loop 201 of the battery pack communicates with the temperature control loop 202 of the converter, the battery pack 301 absorbs heat from the coolant in the temperature control loop 201 of the battery pack during working. The coolant whose temperature decreases flows to the temperature control loop 202 of the converter. Because a working temperature of the converter 302 is high, the converter 302 can heat the coolant to increase the temperature. The coolant that flows out of the temperature control loop 202 of the converter and whose temperature increases flows back to the temperature control loop 201 of the battery pack and continues to heat the battery pack 301 to increase the temperature, to ensure reliable working of the battery pack 301.

On one side of the heat dissipation loop 203 and the evaporator loop 204, the coolant in the heat dissipation loop 203 and the coolant in the evaporator loop 204 do not flow, the compressor 2051 in the compression refrigeration loop 205 does not work, and the heat exchange working fluid does not flow. When the coolant in the heat dissipation loop 203 and the coolant in the evaporator loop 204 do not flow, the flow path of the coolant in the temperature control system 200 is further shortened. This reduces friction resistance of the coolant. The compressor 2051 stops working, and power consumption of the temperature control system 200 is also reduced. In the circulation loop formed when the temperature control loop 201 of the battery pack communicates with the temperature control loop 202 of the converter, the coolant absorbs heat generated by the converter 302 to heat the battery pack 301. This further reduces the power consumption of the temperature control system 200.

When running in the third heat exchange mode, the temperature control system 200 has a specific heating function for the battery pack 301 and has low power consumption. The heat exchange mode is applicable to a scenario in which an external temperature is low, for example, in winter and a cold zone.

The temperature control system 200 in this application may further run in a fourth heat exchange mode. In this heat exchange mode, a connection manner of four flow channels in the multi-way valve 100 is the same as that in the third heat exchange mode. The temperature control loop 201 of the battery pack communicates with the temperature control loop 202 of the converter to form a circulation loop, and the evaporator loop 204 communicates with the heat dissipation loop 203 to form a circulation loop.

Further, in the circulation loop formed when the evaporator loop 204 communicates with the heat dissipation loop 203, coolant circulates, and the compressor 2051 in the compression refrigeration loop 205 works. The heat exchange working fluid in the compression refrigeration loop 205 heats the coolant in the temperature control loop 202 of the converter in the condenser 2052. The heat exchange working fluid whose temperature decreases exchanges heat with the coolant in the evaporator loop 204 in the evaporator 2041. The coolant in the evaporator 2041 is used to heat the heat exchange working fluid to increase the temperature, and the heated heat exchange working fluid flows back to the condenser 2052 and continues to heat the coolant in the temperature control loop 202 of the converter.

On one side of the heat dissipation loop 203 and the evaporator loop 204, the coolant whose temperature decreases in the evaporator loop 204 flows to the radiator 2031 in the heat dissipation loop 203. The coolant forms heat exchange with external air in the radiator 2031, and the temperature increases. The coolant whose temperature increases flows back to the evaporator loop 204 and continues to heat the heat exchange working fluid in the evaporator 2041.

In this heat exchange mode, the battery pack 301 simultaneously absorbs heat generated by the converter 302 and absorbs heat absorbed by the radiator 2031 from the external air. When running in the fourth heat exchange mode, the temperature control system 200 has better heating effect for the battery pack 301. The heat exchange mode is applicable to a scenario in which an external temperature is lower.

The temperature control system 200 in this application may further run in a fifth heat exchange mode. In this case, the electric heating module 2012 in the temperature control loop 201 of the battery pack starts to run. The electric heating module 2012 is configured to further heat the coolant, to heat and increase the temperature of the battery pack 301 when an external temperature is lower. This ensures reliable working of the battery pack 301.

It can be learned that, based on a change of a plurality of flow channels in the multi-way valve 100 in the temperature control system 200, the temperature control system 200 in this application can run in different heat exchange modes, and it is ensured that the heating device (the battery pack 301 and/or the converter 302) works under a suitable temperature condition. This improves reliability of the energy storage system in this application. Correspondingly, because the energy storage system in this application is configured with the temperature control system 200 provided in this application, the energy storage system can work in different external environments.

It may be understood that the temperature control system 200 provided in the foregoing embodiments is also applicable to the vehicle provided in this application, to ensure that the vehicle reliably travels in different environments.

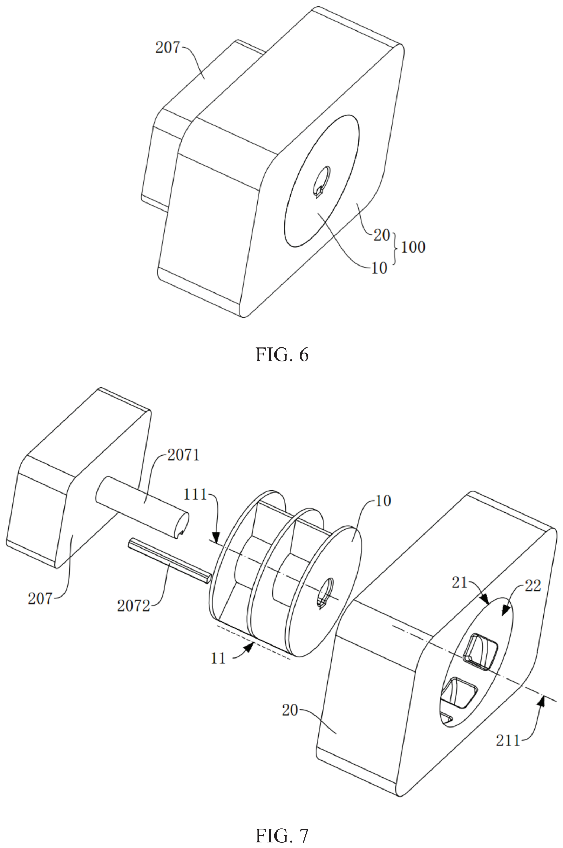

FIG. 6 is a schematic of a structure of the multi-way valve 100 in the temperature control system 200 according to this application, and FIG. 7 is a schematic exploded diagram of a structure of the multi-way valve 100. It may be understood that the multi-way valve 100 in the temperature control system 200 is the multi-way valve synchronously provided in this application.

As shown in FIG. 6 and FIG. 7, the temperature control system 200 in this application includes an actuator 207, and the multi-way valve 100 includes a valve core 10 and a valve seat 20. The valve core 10 is cylindrical. The valve core 10 includes an arc-shaped outer circumferential surface. In this embodiment of this application, the arc-shaped outer circumferential surface of the valve core 10 is defined as a first circumferential surface 11. The valve seat 20 is provided with an inner hole 21, and the inner hole 21 includes an arc-shaped inner circumferential surface. In this embodiment of this application, the arc-shaped inner circumferential surface of the inner hole 21 of the valve seat 20 is defined as a second circumferential surface 22.

The valve core 10 extends into the inner hole 21 of the valve seat 20. The actuator 207 is fixedly connected to the valve core 10 or the valve seat 20. The actuator 207 is configured to drive the valve core 10 to rotate relative to the valve seat 20, or the actuator 207 is configured to drive the valve seat 20 to rotate relative to the valve core 10. In other words, the actuator 207 is configured to drive the valve core 10 and the valve seat 20 to rotate relative to each other.

For example, in the schematic in FIG. 7, the actuator 207 is fixedly connected relative to the valve seat 20. The valve core 10 is further provided with a connection hole, and the actuator 207 is provided with a drive shaft 2071 and a connection key 2072. The drive shaft 2071 extends into the connection hole. The connection key 2072 is connected between a groove of the drive shaft 2071 and a groove of the connection hole. The drive shaft 2071 rotates, so that the actuator 207 can drive the valve core 10 to rotate synchronously by using the connection key 2072. In other words, the actuator 207 can drive the valve core 10 to rotate around a rotation axis (defined as a first rotation axis 111 in this embodiment) of the valve core 10 in the inner hole 21 of the valve seat 20. In some other embodiments, the actuator 207 may alternatively be fixedly connected to the valve core 10, and the actuator 207 is configured to drive the valve seat 20 to rotate relative to the valve core 10.

For the multi-way valve 100 in this application, the outer circumferential surface of the valve core 10 is in contact with the inner circumferential surface of the valve seat 20, so that the first circumferential surface 11 can be attached to the second circumferential surface 22. For example, a diameter of the first circumferential surface 11 is set to be equal to a diameter of the second circumferential surface 22, so that the first circumferential surface 11 can be attached to the second circumferential surface 22. In a process in which the actuator 207 drives the valve core 10 and the valve seat 20 to rotate relative to each other, the first circumferential surface 11 and the second circumferential surface 22 are always attached to each other, and the valve core 10 is connected to the valve seat 20 in a sealed manner, to avoid leakage of coolant or a heat exchange working fluid.

In some embodiments, the diameter of the valve core 10 may alternatively be set to be less than the diameter of the inner hole 21, and a sealing kit (for example, a rubber ring or a sealing ring) is disposed between the valve core 10 and the valve seat 20, to ensure a sealed connection between the valve core 10 and the valve seat 20. In this case, the sealing kit may be considered as a part of the valve core 10 or the valve seat 20. The sealing kit is configured to be constructed to form the first circumferential surface 11 or the second circumferential surface 22. In this case, it may also be understood that the diameter of the first circumferential surface 11 is equal to the diameter of the second circumferential surface 22, and the valve core 10 is connected to the valve seat 20 in a sealed manner.

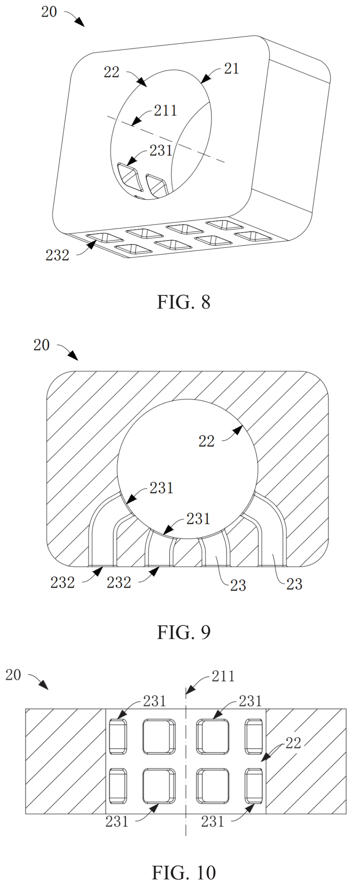

FIG. 8 is a schematic of a structure of the valve seat 20, and synchronously, FIG. 9 and FIG. 10 are schematics of internal cross-sectional structures of the valve seat 20. A cross-sectional direction in FIG. 9 is different from a cross-sectional direction in FIG. 10.

In the schematic in FIG. 8, a shape of the valve seat 20 is a cuboid, and the inner hole 21 penetrates the valve seat 20. The inner hole 21 is cylindrical, and the inner hole 21 has a central axis (defined as a second rotation axis 211 in this embodiment). It may be understood that, when the valve seat 20 is sleeved on the valve core 10, the central axis (the second rotation axis 211) of the inner hole 21 coincides with the rotation axis (the first rotation axis 111) of the valve core 10. The valve seat 20 is provided with a plurality of internal channels 23. The internal channels 23 are spaced from each other, and two opposite ends of each internal channel 23 respectively run through the second circumferential surface 22 and an outer surface of the valve seat 20. As shown in FIG. 9, one end of one internal channel 23 forms an opening 231 on the second circumferential surface 22, and the other end forms a valve port 232 on the outer surface of the valve seat 20. The valve port 232 is a valve port (for example, any one of the first valve port 101 to the eighth valve port 108) of the multi-way valve 100.

As shown in FIG. 10, openings 231 formed by the internal channels 23 on the second circumferential surface 22 are arranged in an array form inside the inner hole 21. Specifically, the plurality of openings 231 are arranged in an array form respectively along a length direction of the second rotation axis 211 and a circumferential direction of the second circumferential surface 22. In other words, the plurality of openings 231 are arranged in an array form respectively along a direction of the first rotation axis 111 of the valve core 10 and a circumferential direction of the valve core 10. In the schematic in FIG. 10, two rows (two layers) of openings 231 are arranged along the length direction of the second rotation axis 211, and four columns of openings 231 are arranged along the circumferential direction of the second circumferential surface 22. In this case, there are eight internal channels 23 in the valve seat 20. The eight internal channels 23 are spaced from each other in the valve seat 20. Eight openings 231 are correspondingly formed. The eight openings 231 are arranged in an array form and spaced from each other on the second circumferential surface 22.

It may also be described as follows: The inner circumferential surface (the second circumferential surface 22) of the valve seat 20 includes eight openings 231, the eight openings 231 are arranged in two layers along a length direction of the first rotation axis 111 of the valve core 10, and four openings 231 in each layer of openings 231 are arranged in alignment along a circumferential direction of the valve core 10. The eight openings 231 are arranged in four columns along the circumferential direction of the valve core 10, and two openings in each column of openings 231 are arranged in alignment along the length direction of the first rotation axis 111 of the valve core 10.

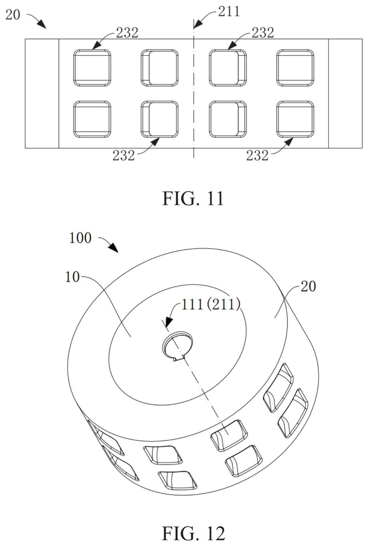

Correspondingly, refer to a schematic in FIG. 11. On the outer surface of the valve seat 20, eight valve ports 232 are correspondingly formed. Each valve port 232 communicates with one opening 231 on the second circumferential surface 22 through one internal channel 23. The eight valve ports 232 are also spaced from each other. The eight valve ports 232 are respectively configured to form the first valve port 101 to the eighth valve port 108. The liquid flow paths of the temperature control system 200 respectively communicate with the eight valve ports 232. It may be understood that the multi-way valve 100 provided in this embodiment is an eight-way valve, and is applicable to the application scenario shown in FIG. 2.

In some other application scenarios, a quantity of internal channels 23 of the multi-way valve 100 may be randomly adjusted, and a quantity and an arrangement manner of corresponding openings 231 and a quantity and an arrangement manner of valve ports 232 may also be randomly adjusted. The openings 231 need to be arranged in an array form, and the valve ports 232 may be disposed randomly based on a specific structure of the valve seat 20. For example, as shown in FIG. 11, the eight valve ports 232 may be disposed on a same surface of the cuboid-shaped valve seat 20. In some other embodiments, the valve ports 232 may be further disposed on different surfaces of the cuboid-shaped valve seat 20, so that the valve ports 232 are connected to the liquid flow paths in the temperature control system 200.

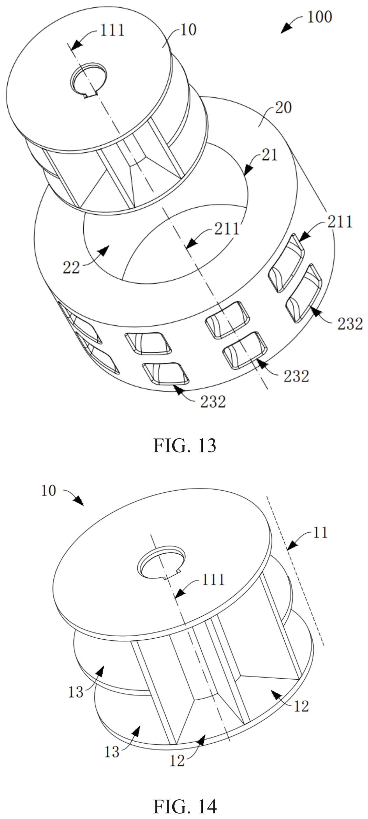

FIG. 12 is a schematic of a structure of the multi-way valve 100 in the temperature control system 200 in another embodiment according to this application, and FIG. 13 is a schematic exploded diagram of a structure of the multi-way valve 100 in this embodiment.

In the schematics in FIG. 12 and FIG. 13, the valve seat 20 of the multi-way valve 100 is cylindrical. The cylindrical valve seat 20 is also provided with an inner hole 21. The valve core 10 extends into the inner hole 21 and fits with the valve seat 20 to rotate. In this case, the plurality of valve ports 232 are all located on an outer circumferential surface of the cylindrical valve seat 20. Each liquid flow path in the temperature control system 200 is attached to the outer circumferential surface of the valve seat 20, and respectively communicates with each valve port 232.

It should be noted that, in some embodiments, the shape of the valve seat 20 may alternatively be a polygonal cube or any other three-dimensional shape. In some embodiments, the inner hole 21 of the valve seat 20 may alternatively be a blind hole. These structures do not affect rotation and fitting between the valve core 10 and the valve seat 20.

In the cuboid structure of the valve seat 20 shown in FIG. 11, each liquid flow path of the temperature control system 200 is further conveniently and uniformly disposed on a refrigerant substrate (not shown in the figure). A surface that is of the valve seat 20 and that is provided with the valve ports 232 is attached to a surface of the refrigerant substrate, and each valve port 232 is respectively aligned with an interface of one liquid flow path in the refrigerant substrate, to implement an operation of switching a working mode of the temperature control system 200 by using the multi-way valve 100.

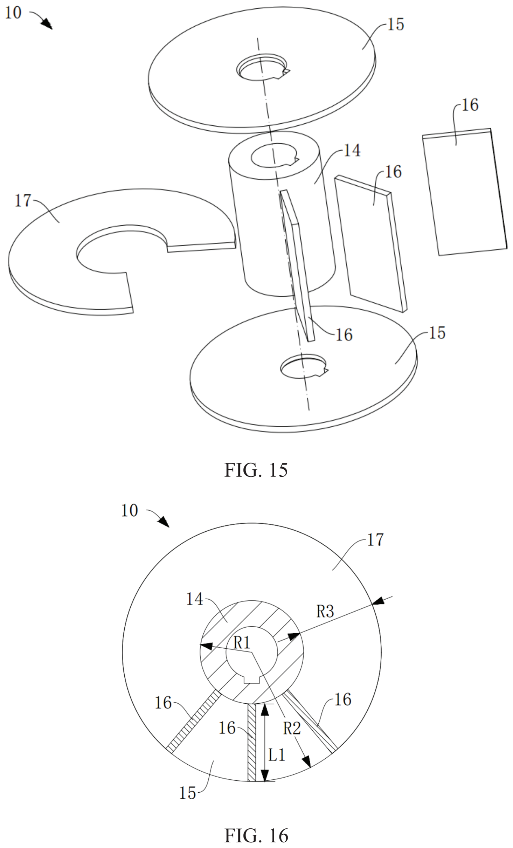

FIG. 14 is a schematic of a structure of the valve core 10, and synchronously, FIG. 15 is a schematic exploded diagram of a structure of the valve core 10.

In the schematics in FIG. 14 and FIG. 15, the first circumferential surface 11 of the valve core 10 surrounds the first rotation axis 111, and a plurality of axial grooves 12 and a plurality of circumferential grooves 13 are formed on the first circumferential surface 11 of the valve core 10.

Specifically, in the schematic in FIG. 14, there are two axial grooves 12 on the first circumferential surface 11. The two axial grooves 12 separately extend along the length direction of the first rotation axis 111. In addition, in this embodiment, the two axial grooves 12 are disposed side by side and adjacent to each other along a circumferential direction of the first circumferential surface 11.

The first circumferential surface 11 further includes two circumferential grooves 13. The two circumferential grooves 13 separately extend along the circumferential direction of the first circumferential surface 11. In addition, in this embodiment, the two circumferential grooves 13 are further disposed side by side along the length direction of the first rotation axis 111. Two opposite ends of each circumferential groove 13 are respectively located on one side of two adjacent axial grooves 12. In other words, one end of each circumferential groove 13 is close to one axial groove 12, each circumferential groove 13 further extends around the circumferential direction of the first circumferential surface 11, and the other end of each circumferential groove 13 is close to the other axial groove 12.

It should be noted that, in some other application scenarios, when a quantity and an array arrangement manner of openings 231 in the valve seat 20 are adjusted based on a function requirement of the temperature control system 200, quantities and arrangement manners of axial grooves 12 and circumferential grooves 13 in the valve core 10 may also be adjusted fittingly, so that when the actuator 207 drives the valve core 10 to rotate relative to the valve seat 20, each axial groove 12 and each circumferential groove 13 can respectively communicate with at least two adjacent openings 231, and the preset liquid flow paths can communicate with each other.

It may be understood that, in an embodiment, one axial groove 12 extends along the direction of the first rotation axis 111, and the inner circumferential surface of the fitted valve seat 20 is provided with a plurality of columns of openings 231. Openings 231 in each column of openings 231 are aligned along the direction of the first rotation axis 111. Openings 231 in a same column of openings 231 communicate with each other through a same axial groove 12. When there are three openings 231 in a column, three openings 231 in the multi-way valve 100 that communicate with each other through a same axial groove 12 form a structure of a group of three-way valves in the multi-way valve 100.

In an embodiment, one circumferential groove 13 extends along the circumferential direction of the first circumferential surface 11, and the inner circumferential surface of the fitted valve seat 20 is provided with a plurality of layers (rows) of openings 231. Openings 231 in each layer (row) of openings 231 are aligned along the circumferential direction of the first circumferential surface 11. Openings 231 in a same layer (row) of openings 231 communicate with each other through a same circumferential groove 13. When there are three openings 231 in a layer (row), three openings 231 in the multi-way valve 100 that communicate with each other through a same circumferential groove 13 form a structure of a group of three-way valves in the multi-way valve 100.

Based on the function requirement of the temperature control system 200, a quantity of openings 231 in a same column of openings 231 or a same layer of openings 231 may be adjusted randomly, to form a structure, in the multi-way valve 100, in which a plurality of groups of openings 231 communicate with each other.

For details, refer to FIG. 15. The valve core 10 includes a central column 14, cover plates 15, vertical partition plates 16, and a horizontal partition plate 17. There is one central column 14, and a length direction of one central column 14 is parallel to the first rotation axis 111 of the valve core 10. There are two cover plates 15, and the two cover plates 15 are fastened at intervals to two opposite ends of the central column along the length direction of the central column 14. A shape of the cover plate 15 is circular, and a shape of the central column 14 is cylindrical.

Both the vertical partition plates 16 and the horizontal partition plate 17 are located between the two cover plates 15. Each vertical partition plate 16 is disposed along a direction perpendicular to the cover plate 15, and each horizontal partition plate 17 is disposed along a direction parallel to the cover plate 15. In other words, one side of each vertical partition plate 16 is parallel to the length direction of the central column 14, and each horizontal partition plate 17 is disposed along a direction perpendicular to the length direction of the central column 14.

In the schematic in FIG. 15, there are three vertical partition plates 16. The three vertical partition plates 16 are arranged at intervals along the circumferential direction of the first circumferential surface 11. A shape of the vertical partition plate 16 is approximately rectangular. Each vertical partition plate 16 is disposed along the direction perpendicular to the cover plate 15. Two opposite sides of the vertical partition plate 16 are respectively connected to the two cover plates 15. One side of each vertical partition plate 16 is further fixedly connected to the central column 14.

In this way, two adjacent vertical partition plates 16, the two cover plates 15, and the central column 14 form one axial groove 12 in an enclosing manner. The three vertical partition plates 16 that are sequentially arranged at intervals are separated between the cover plates 15 and the central column 14 to form two axial grooves 12 that are arranged side by side. An opening of the axial groove 12 faces an outer side of the first circumferential surface 11, that is, faces an outer side of the valve core 10.

In the schematic in FIG. 15, there is one horizontal partition plate 17. One horizontal partition plate 17 is fastened to the middle of the central column 14 along the length direction of the central column 14. The horizontal partition plate 17 is separately spaced from the cover plates 15 at two ends. Refer to FIG. 16. The horizontal partition plate 17 is approximately a sector. The horizontal partition plate 17 extends around the circumferential direction of the first circumferential surface 11. Two opposite ends of the horizontal partition plate 17 are separately fixedly connected to one vertical partition plate 16.

In this way, the horizontal partition plate 17, the two cover plates 15, the two vertical partition plates 16, and the central column 14 form two circumferential grooves 13 in an enclosing manner. It is also described as that two circumferential grooves 13 are formed between the two cover plates 15 through the horizontal partition plate 17 through separation. The two circumferential grooves 13 are disposed side by side along the length direction of the central column 14 (namely, the direction of the first rotation axis 111). An opening of the circumferential groove 13 also faces the outer side of the first circumferential surface 11, that is, faces the outer side of the valve core 10.

Based on the foregoing disposition, the two axial grooves 12 and the two circumferential grooves 13 are separately formed on the first circumferential surface 11 of the valve core 10. The two axial grooves 12 and the two circumferential grooves 13 are arranged at intervals along the circumferential direction of the first circumferential surface 11. The two axial grooves 12 are further arranged side by side along the circumferential direction of the first circumferential surface 11. The two circumferential grooves 13 are arranged side by side along the direction of the first rotation axis 111.

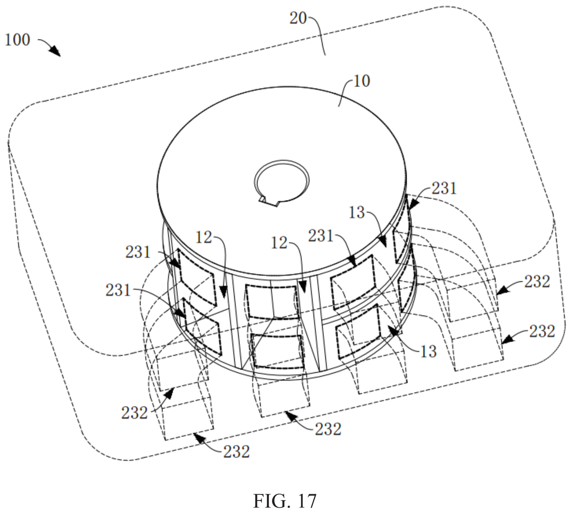

FIG. 17 shows a form in which the valve core 10 extends into the inner hole 21 and fits with the valve seat 20.

In the schematic in FIG. 17, after the valve core 10 extends into the inner hole 21, the first circumferential surface 11 of the valve core 10 is attached to the second circumferential surface 22 of the valve seat 20. An opening of the axial groove 12 and an opening of the circumferential groove 13 in the valve core 10 both face the second circumferential surface 22, and each opening 231 in the valve seat 20 faces the first circumferential surface 11. The temperature control system 200 controls, by using the actuator 207, the valve core 10 and the valve seat 20 to rotate relative to each other, so that each opening 231 in the valve seat 20 can communicate with an adjacent opening 231 through the axial groove 12 or the circumferential groove 13.

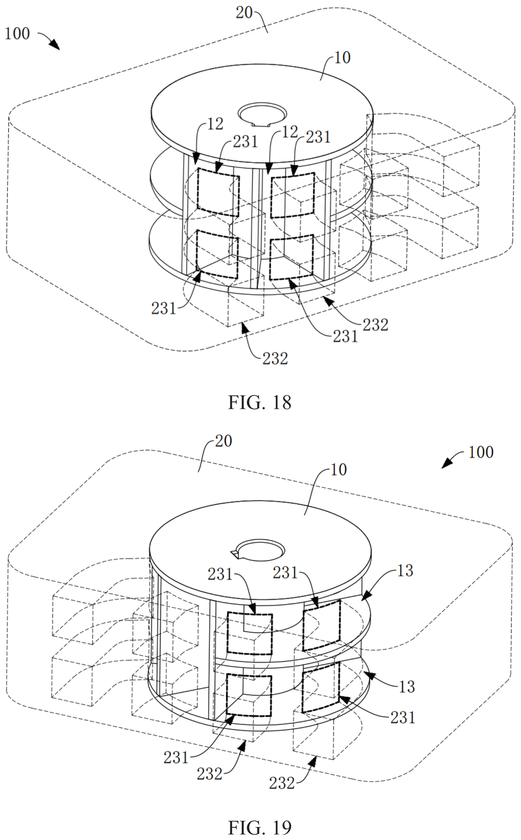

For details, refer to a schematic in FIG. 18. A maximum spacing distance between two adjacent vertical partition plates 16 in the valve core 10 is greater than or equal to a width of a single opening 231 on the second circumferential surface 22 along the circumferential direction of the second circumferential surface 22. In addition, a length of the central column 14 is greater than a farthest distance between two openings 231 arranged along the length direction of the second rotation axis 211. In this way, a distance between the two cover plates 15 is greater than the farthest distance between the two openings 231 arranged along the length direction of the second rotation axis 211.

Based on the foregoing disposition, the two openings 231 arranged along the length direction of the second rotation axis 211 can be accommodated in one axial groove 12. In other words, one axial groove 12 communicates with the two openings 231 arranged along the length direction of the second rotation axis 211. The two fitted openings 231 respectively communicate with two internal channels 23. Two valve ports 232 on the valve seat 20 may communicate with each other through one axial groove 12 on the valve core 10.

In this embodiment of this application, the two openings 231 arranged along the length direction of the second rotation axis 211 are further defined as one column of openings 231. The plurality of columns of openings 231 are arranged at intervals along the circumferential direction of the second circumferential surface 22. In this way, one axial groove 12 is configured to connect a same column of openings 231. In the schematic in FIG. 18, two axial grooves 12 arranged side by side are respectively configured to connect two columns of openings 231.

In a schematic in FIG. 19, a spacing distance between the horizontal partition plate 17 and any cover plate 15 is greater than or equal to a height of a single opening 231 on the second circumferential surface 22 along a direction of the second rotation axis 211. In addition, an arc length of the horizontal partition plate 17 relative to the first rotation axis 111 is greater than a farthest distance between two openings 231 arranged adjacent to each other along the circumferential direction of the second circumferential surface 22. In this way, the two openings 231 arranged along the circumferential direction of the second circumferential surface 22 are accommodated in one circumferential groove 13. In other words, one circumferential groove 13 communicates with the two openings 231 arranged along the circumferential direction of the second circumferential surface 22. The two fitted openings 231 respectively communicate with two internal channels 23. Two valve ports 232 on the valve seat 20 may also communicate with each other through one circumferential groove 13 on the valve core 10.

In an embodiment, refer to FIG. 16. The central column 14 has a radius R1. The cover plate 15 is circular, and the circular cover plate 15 has a radius R2. The vertical partition plate 16 has a side connected to the cover plate 15, and a length size of the side is L1. The sector-shaped horizontal partition plate 17 has a radius R3.

In this embodiment, a sum of the length L1 of the side of the vertical partition plate 16 and the radius R1 of the central column 14 is set to be equal to the radius R2 of the cover plate 15. In this way, the vertical partition plate 16 is away from a side of the central column 14, and is flush with an outer edge of the cover plate 15. In this case, the vertical partition plate 16 is in contact with the second circumferential surface 22, so that sealing effect of the axial groove 12 can be implemented.

In an embodiment, a sum of the radius R3 of the horizontal partition plate 17 and the radius R1 of the central column 14 is further set to be equal to the radius R2 of the cover plate 15. In this way, the horizontal partition plate 17 is away from the side of the central column 14, and is also flush with the outer edge of the cover plate 15. In this case, the horizontal partition plate 17 is in contact with the second circumferential surface 22, so that sealing effect of the circumferential groove 13 can be implemented.

In the schematic in FIG. 17, the two axial grooves 12 are located on the left in the figure, and the two axial grooves 12 are configured to connect two left columns of openings 231 in the four columns of openings 231. In FIG. 17, two right columns of openings 231 communicate with each other through the two circumferential grooves 13. Specifically, one opening 231 in one column of openings 231 communicates with one opening 231 in the other column of openings 231 through one circumferential groove 13. The other opening 231 in the column of openings 231 communicates with the other opening 231 in the other column of openings 231 through the other circumferential groove 13. In addition, two openings 231 that communicate with a same circumferential groove 13 are separately close to a same cover plate 15. In addition, the two openings 231 that communicate with the same circumferential groove 13 are arranged adjacent to each other along the circumferential direction of the second circumferential surface 22.

It can be learned that, in the multi-way valve 100 in this application, the first circumferential surface 11 of the valve core 10 includes the plurality of axial grooves 12 and the plurality of circumferential grooves 13, each axial groove 12 extends along the direction of the first rotation axis 111 of the valve core 10, each circumferential groove 13 extends along the circumferential direction of the first circumferential surface 11, and the plurality of axial grooves 12 and the plurality of circumferential grooves 13 are arranged at intervals along the circumferential direction of the first circumferential surface 11.

The second circumferential surface 22 includes the plurality of openings 231. The plurality of openings 231 are arranged in an array form and at intervals along the direction of the second rotation axis 211 of the inner hole 21 and along the circumferential direction of the second circumferential surface 22. Each opening 231 communicates with another adjacent opening 231 through one axial groove 12 or one circumferential groove 13. Each opening 231 is further connected to one liquid flow path of the temperature control system 200 through an internal channel 23 of the valve seat 20.

In the temperature control system 200 in this application, the outer circumferential surface (the first circumferential surface 11) of the valve core 10 is attached to the inner circumferential surface (the second circumferential surface 22) of the inner hole 21 of the valve seat 20, so that the openings 231 on the second circumferential surface 22 of the valve seat 20 can communicate with each other through the axial grooves 12 or the circumferential grooves 13 of the valve core 10. Two adjacent openings 231 arranged along the direction of the second rotation axis 211 of the inner hole 21 may communicate with each other through an axial groove 12, and two adjacent openings 231 arranged along the circumferential direction of the second circumferential surface 22 may communicate with each other through a circumferential groove 13. An opening 231 on the valve seat 20 communicates with an adjacent opening 231 through an axial groove 12 or a circumferential groove 13 of the valve core 10. The internal channels 23 in the valve seat 20 are arranged, so that the actuator 207 can drive the valve core 10 to rotate by a small angle, to change a flow path of each liquid flow path in the multi-way valve 100. The multi-way valve 100 in this application has a compact structure. This helps implement miniaturization of the temperature control system 200 and reduce a volume occupied by the temperature control system 200 in the energy storage system or the vehicle.

It should be noted that, in the foregoing embodiment, the valve core 10 is constructed in a manner of splicing the central column 14, the cover plate 15, the vertical partition plate 16, and the horizontal partition plate 17. Each component has a simple structure and is easy to process. In addition, the cover plate 15, the vertical partition plate 16, and the horizontal partition plate 17 are all in a plate shape. In this way, cross-sectional areas of the formed axial groove 12 and circumferential groove 13 are large. This increases a flow rate of liquid allowed to pass through the multi-way valve 100.

In some other embodiments, the entire valve core 10 may alternatively be cylindrical, and a groove is processed on the first circumferential surface 11 of the valve core 10, to form an axial groove 12 and a circumferential groove 13. An overall structure of the valve core 10 has higher rigidity and structural stability, and the valve core 10 may be used in a usage scenario, of the multi-way valve 100, in which liquid pressure is large. The valve core 10 formed in the splicing manner is merely an example for illustration. A specific forming manner of the valve core 10 is not limited in this application.

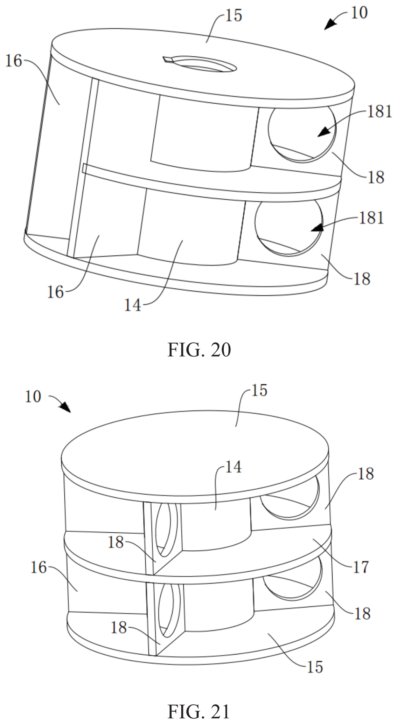

Refer to FIG. 20. The valve core 10 may be further provided with several support plates 18. Each support plate 18 is connected between one cover plate 15 and the horizontal partition plate 17. The support plates 18 are configured to support the horizontal partition plate 17, to ensure relative positions of the cover plate 15 and the horizontal partition plate 17. In the embodiment shown in FIG. 15, a radian of the horizontal partition plate 17 is large. Therefore, the support plates 18 are disposed between the cover plate 15 and the horizontal partition plate 17, so that structural stability of the horizontal partition plate 17 can be improved. The support plate 18 is further provided with a penetrated through hole 181, and the through hole 181 is configured to connect the circumferential grooves 13.

In the schematic in FIG. 20, there are two support plates 18, and the two support plates 18 are flush with each other along the direction of the first rotation axis 111. In an embodiment, the two support plates 18 may be further disposed as an integrated structure, and the horizontal partition plate 17 is spliced on two sides of the two support plates 18 of the integrated structure.

In some other embodiments, more support plates 18 may be disposed. For example, as shown in FIG. 21, there are four support plates 18. Every two support plates 18 are flush with each other along the direction of the first rotation axis 111. One pair of support plates 18 that are flush with each other and the other pair of support plates 18 that are flush with each other are spaced from each other along the circumferential direction of the first circumferential surface 11. The structural stability of the horizontal partition plate 17 can be further improved by using a structure of the four support plates 18, and included angles between the support plates 18 and included angles between the support plates 18 and the vertical partition plates 16 are smaller. When the valve core 10 is manufactured in a casting manner, demolding of the valve core 10 is better facilitated.

It may be understood that, in the embodiment shown in FIG. 20, the two support plates 18 that are flush with each other along the direction of the first rotation axis 111 may alternatively be disposed as an integrated structure. In this case, the horizontal partition plate 17 may be divided into three segments, and any two segments of the horizontal partition plate 17 are spliced on two sides of the two support plates 18 of the integrated structure.

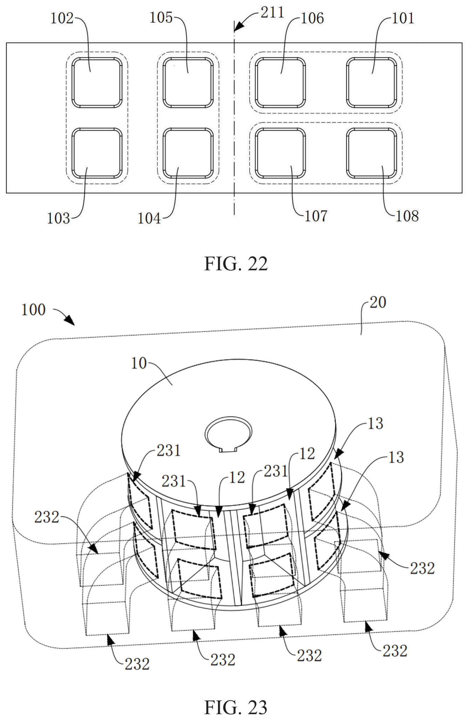

It should be noted that the through hole 181 on the support plate 18 is constructed as a circle in embodiments shown in FIG. 15 and FIG. 20. In some other embodiments, the through hole 181 may alternatively be constructed as a rectangle, an ellipse, or any other shape, to reduce flow resistance of coolant in the valve core 10. FIG. 22 shows position relationships between the openings 231 and the valve ports 232 that correspondingly communicate with the openings 231 in the foregoing embodiment. In an embodiment, in two rows of openings 231 shown in FIG. 20, valve ports 232 that correspondingly communicate with four openings 231 in an upper row are the second valve port 102, the fifth valve port 105, the sixth valve port 106, and the first valve port 101 from left to right sequentially. Valve ports 232 that correspondingly communicate with four openings 231 in a lower row are the third valve port 103, the fourth valve port 104, the seventh valve port 107, and the eighth valve port 108 from left to right sequentially.

In this way, in correspondence to an angle by which the valve core 10 fits with the valve seat 20 to rotate shown in FIG. 17, the fifth valve port 105 communicates with the fourth valve port 104 through one axial groove 12, the second valve port 102 communicates with the third valve port 103 through the other axial groove 12, the first valve port 101 communicates with the sixth valve port 106 one circumferential groove 13, and the eighth valve port 108 communicates with the seventh valve port 107 through the other circumferential groove 13.

When the multi-way valve 100 is used in the foregoing temperature control system 200, the temperature control loop 201 of the battery pack communicates with the evaporator loop 204 to form a circulation loop, and the temperature control loop 202 of the converter communicates with the heat dissipation loop 203 to form a circulation loop. It may be understood that, based on the arrangement manner of the valve ports 232 in the valve seat 20 shown in FIG. 22, the valve core 10 fits with the valve seat 20 to rotate by the angle shown in FIG. 17, so that a connection structure of the liquid flow paths when the temperature control system 200 runs in the first heat exchange mode can be implemented.

After the temperature control system 200 controls, by using the actuator 207, the valve core 10 and the valve seat 20 to rotate relative to each other, the valve core 10 and the valve seat 20 may rotate to another relative angle shown in FIG. 23. In this case, the two axial grooves 12 fit with two columns of openings 231 located in the middle in FIG. 23, and each axial groove 12 is configured to connect one column of openings 231. Two columns of openings 231 located on two sides respectively communicate with each other through the two circumferential grooves 13.

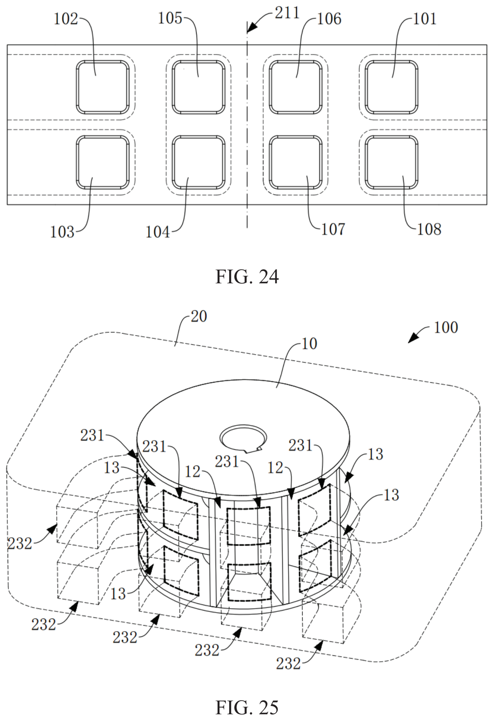

For a specific communication form, refer to a schematic in FIG. 24. The fifth valve port 105 communicates with the fourth valve port 104 through one axial groove 12, the sixth valve port 106 communicates with the seventh valve port 107 through the other axial groove 12, the second valve port 102 communicates with the first valve port 101 through one circumferential groove 13, and the third valve port 103 communicates with the eighth valve port 108 through the other circumferential groove 13.

In this way, the temperature control loop 201 of the battery pack, the temperature control loop 202 of the converter, and the heat dissipation loop 203 communicate with each other to form a circulation loop, and two valve ports (the third valve port 103 and the eighth valve port 108) of the evaporator loop 204 are short-circuited through one circumferential groove 13 of the multi-way valve 100. It may be understood that the valve core 10 fits with the valve seat 20 to rotate by the angle shown in FIG. 23, so that a connection structure of the liquid flow paths when the temperature control system 200 runs in the second heat exchange mode can be implemented.

FIG. 25 shows a fitting manner of the valve core 10 and the valve seat 20 at still another relative angle. In the schematic in FIG. 25, the two axial grooves 12 are located on the right in the figure, and the two axial grooves 12 are configured to connect two right columns of openings 231 in the four columns of openings 231. In FIG. 25, two left columns of openings 231 communicate with each other through the two circumferential grooves 13.

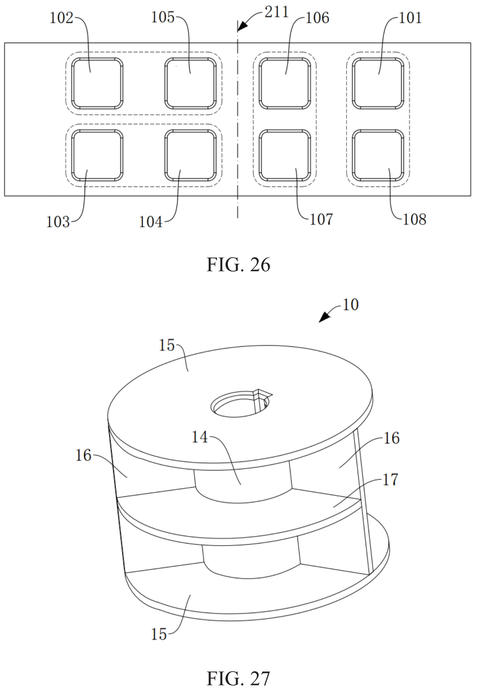

For a specific communication form, refer to a schematic in FIG. 26. The sixth valve port 106 communicates with the seventh valve port 107 through one axial groove 12, the first valve port 101 communicates with the eighth valve port 108 through the other axial groove 12, the second valve port 102 communicates with the fifth valve port 105 through one circumferential groove 13, and the third valve port 103 communicates with the fourth valve port 104 through the other circumferential groove 13.

In this way, the temperature control loop 201 of the battery pack communicates with the temperature control loop 202 of the converter to form a circulation loop, and the evaporator loop 204 communicates with the heat dissipation loop 203 to form a circulation loop. It may be understood that the valve core 10 fits with the valve seat 20 to rotate by the angle shown in FIG. 25, so that a connection structure of the liquid flow paths when the temperature control system 200 runs in the third heat exchange mode, the fourth heat exchange mode, and the fifth heat exchange mode can be implemented.

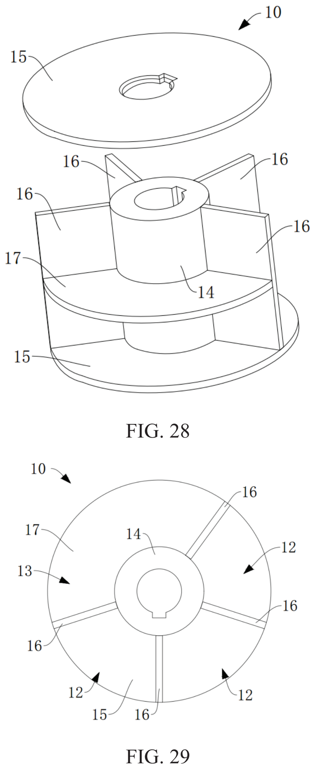

FIG. 27 is a schematic of a structure of another valve core 10 according to this application, and synchronously, FIG. 28 is a schematic exploded diagram of a structure of the valve core 10 in this embodiment, and FIG. 29 is a schematic of a plane structure of the valve core 10 in this embodiment.

As shown in FIG. 27 to FIG. 29, in this embodiment, the valve core 10 includes a central column 14, two cover plates 15, four vertical partition plates 16, and one horizontal partition plate 17. The two cover plates 15 are fastened at intervals to two opposite ends of the central column along a length direction of the central column 14. The four vertical partition plates 16 are arranged at intervals along the circumferential direction of the first circumferential surface 11. The four vertical partition plates 16 that are sequentially arranged at intervals are separated between the cover plates 15 and the central column 14 to form three axial grooves 12 that are arranged side by side. The horizontal partition plate 17 extends around the circumferential direction of the first circumferential surface 11. Two opposite ends of the horizontal partition plate 17 are separately fixedly connected to one vertical partition plate 16. Two circumferential grooves 13 are formed between the two cover plates 15 through the horizontal partition plate 17 through separation.

In the structure of the valve core 10 provided in this embodiment, the three axial grooves 12 and the two circumferential grooves 13 are separately formed on the first circumferential surface 11. The three axial grooves 12 and the two circumferential grooves 13 are arranged at intervals along the circumferential direction of the first circumferential surface 11. The three axial grooves 12 are further arranged side by side along the circumferential direction of the first circumferential surface 11. The two circumferential grooves 13 are arranged side by side along the direction of the first rotation axis 111.

As shown in FIG. 29, the three axial grooves 12 are distributed at a large angle along the circumferential distribution of the first circumferential surface 11. When the valve core 10 is manufactured in a casting manner, demolding of the valve core 10 is better facilitated. In addition, the three axial grooves 12 are disposed, so that a circumferential length of the circumferential groove 13 is reduced. In this way, an arc angle of the horizontal partition plate 17 also decreases correspondingly. The circumferential length of the circumferential groove 13 decreases, so that a transmission path of coolant in the circumferential groove 13 can be shortened. This reduces flow resistance of the coolant in the circumferential groove 13.

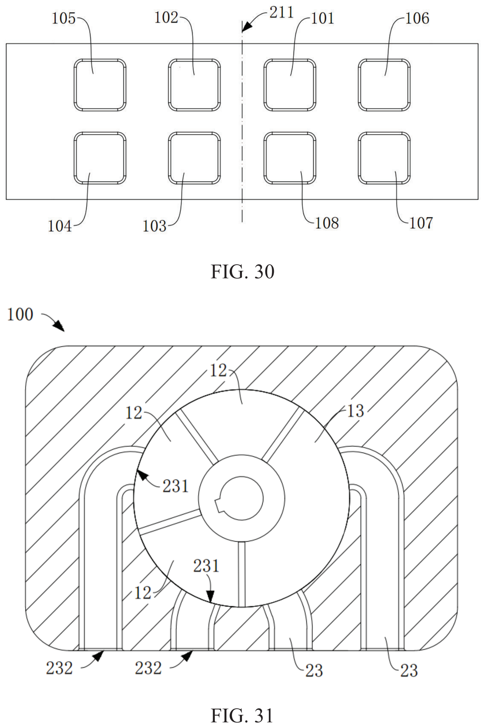

For example, an included angle between two adjacent vertical partition plates 16 may be 72 degrees. FIG. 30 is a schematic of plane arrangement of valve ports 232 on the valve seat 20 in this embodiment. In this embodiment, two rows of valve ports 232 are the fifth valve port 105, the second valve port 102, the first valve port 101, and the sixth valve port 106 from left to right sequentially. Valve ports 232 that correspondingly communicate with four openings 231 in a lower row are the fourth valve port 104, the third valve port 103, the eighth valve port 108, and the seventh valve port 107 from left to right sequentially.

In this way, FIG. 31 shows a form in which the valve core 10 extends into the inner hole 21 and fits with the valve seat 20 in this embodiment. In the schematic in FIG. 31, two axial grooves 12 in the three axial grooves 12 of the valve core 10 are located on the left, and the other axial groove 12 of the valve core 10 is located upward. The circumferential groove 13 of the valve core 10 is located on the right.

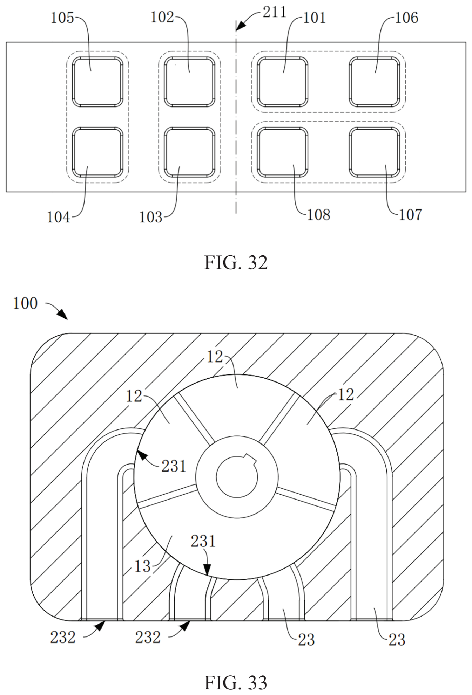

Refer to FIG. 32. The two left axial grooves 12 in the valve core 10 are respectively configured to implement communication between the fifth valve port 105 and the fourth valve port 104 and communication between the second valve port 102 and the third valve port 103. The two circumferential grooves 13 of the valve core 10 are respectively configured to implement communication between the first valve port 101 and the sixth valve port 106 and communication between the eighth valve port 108 and the seventh valve port 107. The upward axial groove 12 in the valve core 10 is in an unconnected state.

Such a communication manner is the same as a communication manner shown in FIG. 22 when the valve core 10 fits with the valve seat 20. It may be understood that, in this embodiment, when the valve core 10 fits with the valve seat 20 in the manner shown in FIG. 31 and FIG. 32, a connection structure of the liquid flow paths when the temperature control system 200 runs in the first heat exchange mode can be implemented.

FIG. 33 shows another form in which the valve core 10 extends into the inner hole 21 and fits with the valve seat 20 in this embodiment. In the schematic in FIG. 33, the circumferential groove 13 of the valve core 10 is located at a lower and middle position. Two axial grooves 12 in the three axial grooves 12 of the valve core 10 are respectively located on two sides of the circumferential groove 13, and the other axial groove 12 of the valve core 10 is located upward.

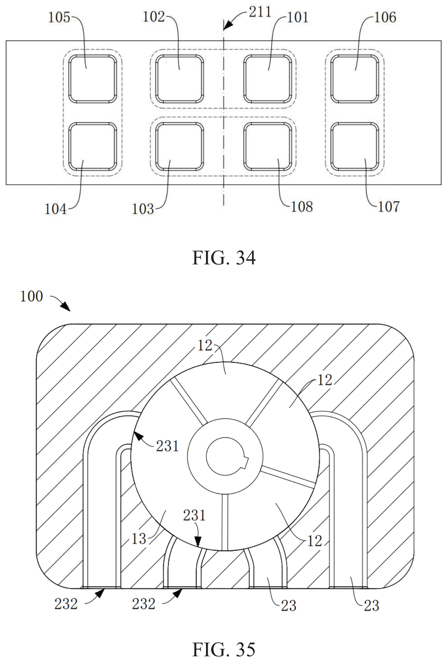

In this way, refer to FIG. 34. The two axial grooves 12 in the valve core 10 that are located on left and right sides are respectively configured to implement communication between the fifth valve port 105 and the fourth valve port 104 and communication between the sixth valve port 106 and the seventh valve port 107. The two circumferential grooves 13 of the valve core 10 are respectively configured to implement communication between the second valve port 102 and the first valve port 101 and communication between the third valve port 103 and the eighth valve port 108. The upward axial groove 12 in the valve core 10 is in an unconnected state.

Such a communication manner is the same as a communication manner shown in FIG. 24 when the valve core 10 fits with the valve seat 20. It may be understood that, in this embodiment, when the valve core 10 fits with the valve seat 20 in the manner shown in FIG. 33 and FIG. 34, a connection structure of the liquid flow paths when the temperature control system 200 runs in the second heat exchange mode can be implemented.

FIG. 35 shows still another form in which the valve core 10 extends into the inner hole 21 and fits with the valve seat 20 in this embodiment. In the schematic in FIG. 35, two axial grooves 12 in the three axial grooves 12 of the valve core 10 are located on the right, and the other axial groove 12 of the valve core 10 is located upward. The circumferential groove 13 of the valve core 10 is located on the left.

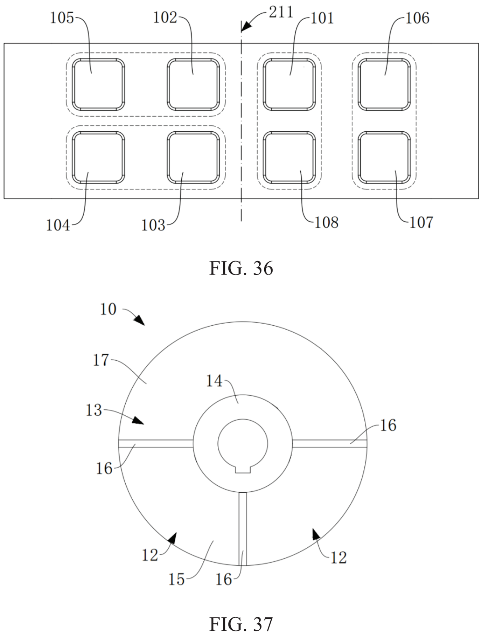

Refer to FIG. 36. The two right axial grooves 12 in the valve core 10 are respectively configured to implement communication between the sixth valve port 106 and the seventh valve port 107 and communication between the first valve port 101 and the eighth valve port 108. The two circumferential grooves 13 of the valve core 10 are respectively configured to implement communication between the fifth valve port 105 and the second valve port 102 and communication between the fourth valve port 104 and the third valve port 103. The upward axial groove 12 in the valve core 10 is in an unconnected state.

Such a communication manner is the same as a communication manner shown in FIG. 26 when the valve core 10 fits with the valve seat 20. It may be understood that, in this embodiment, when the valve core 10 fits with the valve seat 20 in the manner shown in FIG. 35 and FIG. 36, a connection structure of the liquid flow paths when the temperature control system 200 runs in the third heat exchange mode, the fourth heat exchange mode, and the fifth heat exchange mode can be implemented.

This application further provides another implementation structure of the multi-way valve 100. For details, refer to a schematic in FIG. 37. As shown in FIG. 37, the valve core 10 includes a central column 14, two cover plates 15, three vertical partition plates 16, and one horizontal partition plate 17. The two cover plates 15 are fastened at intervals to two opposite ends of the central column along a length direction of the central column 14. The three vertical partition plates 16 are arranged at intervals along the circumferential direction of the first circumferential surface 11. The three vertical partition plates 16 that are sequentially arranged at intervals are separated between the cover plates 15 and the central column 14 to form two axial grooves 12 that are arranged side by side. The horizontal partition plate 17 extends around the circumferential direction of the first circumferential surface 11. Two opposite ends of the horizontal partition plate 17 are separately fixedly connected to one vertical partition plate 16. Two circumferential grooves 13 are formed between the two cover plates 15 through the horizontal partition plate 17 through separation.

In the structure of the valve core 10 provided in this embodiment, the two axial grooves 12 and the two circumferential grooves 13 are separately formed on the first circumferential surface 11. The two axial grooves 12 and the two circumferential grooves 13 are arranged at intervals along the circumferential direction of the first circumferential surface 11. The two axial grooves 12 are further arranged side by side along the circumferential direction of the first circumferential surface 11. The two circumferential grooves 13 are arranged side by side along the direction of the first rotation axis 111.

For example, an included angle between two adjacent vertical partition plates 16 may be 90 degrees. Correspondingly, an arc angle of the horizontal partition plate 17 may be 180 degrees.

The structure of the valve core 10 provided in this embodiment is similar to the structure of the valve core 10 shown in FIG. 16, and both include two axial grooves 12 and two circumferential grooves 13. A difference lies in that an angle between adjacent vertical partition plates 16 in the valve core 10 provided in this embodiment is larger, so that a width size of each axial groove 12 along the circumferential direction of the first circumferential surface 11 increases. Correspondingly, an arc angle of the horizontal partition plate 17 is reduced, so that a length size of each circumferential groove 13 along the circumferential direction of the first circumferential surface 11 is reduced.

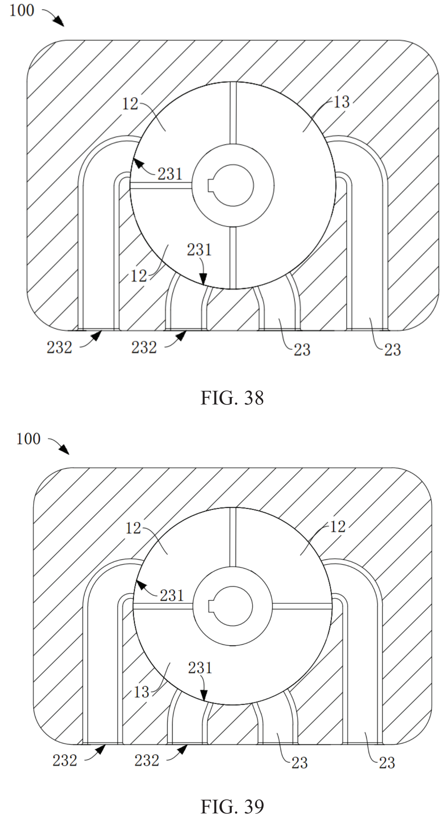

In the structure of the valve core 10 provided in this embodiment, a size of each axial groove 12 in the valve core 10 is close to a size of each circumferential groove 13, and flow resistance of coolant when flowing in the axial groove 12 or the circumferential groove 13 is uniform. In addition, the valve core 10 provided in this embodiment may be used in the arrangement form of the valve ports 232 on the valve seat 20 shown in FIG. 30. For details, refer to FIG. 38.

In the schematic in FIG. 38, the two axial grooves 12 in the valve core 10 provided in this embodiment rotate relative to the valve seat 20 to the left. One left and upper axial groove 12 is configured to implement communication between the fifth valve port 105 and the fourth valve port 104 (as shown in FIG. 32, the same as below). One left and lower axial groove 12 is configured to implement communication between the second valve port 102 and the third valve port 103. The two right circumferential grooves 13 are respectively configured to implement communication between the first valve port 101 and the sixth valve port 106 and communication between the eighth valve port 108 and the seventh valve port 107.

It may be understood that, similar to the embodiment, shown in FIG. 31, in which the valve core 10 fits with the valve seat 20, the embodiment shown in FIG. 38 may be used to implement a connection structure of the liquid flow paths when the temperature control system 200 runs in the first heat exchange mode.

In another form, provided in this embodiment shown in FIG. 39, in which the valve core 10 fits with the valve seat 20, the circumferential groove 13 of the valve core 10 rotates to a lower position. The two circumferential grooves 13 are respectively configured to implement communication between the second valve port 102 and the first valve port 101 and communication between the third valve port 103 and the eighth valve port 108 (as shown in FIG. 34, the same as below). The two axial grooves 12 of the valve core 10 rotate to an upper position. One upper and left axial groove 12 is configured to implement communication between the fifth valve port 105 and the fourth valve port 104. One upper and right axial groove 12 is configured to implement communication between the sixth valve port 106 and the seventh valve port 107.

It may be understood that, similar to the embodiment, shown in FIG. 33, in which the valve core 10 fits with the valve seat 20, the embodiment shown in FIG. 39 may be used to implement a connection structure of the liquid flow paths when the temperature control system 200 runs in the second heat exchange mode.

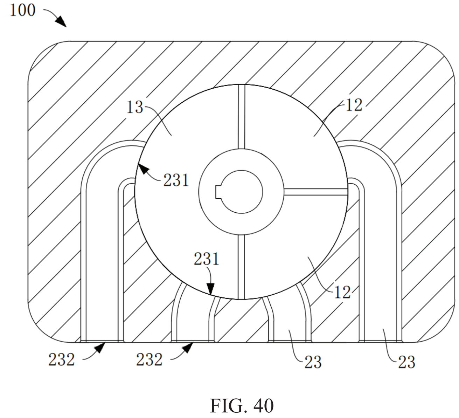

In another form, provided in this embodiment shown in FIG. 40, in which the valve core 10 fits with the valve seat 20, the circumferential groove 13 of the valve core 10 rotates to the left. The two circumferential grooves 13 are respectively configured to implement communication between the fifth valve port 105 and the second valve port 102 and communication between the fourth valve port 104 and the third valve port 103 (as shown in FIG. 36, the same as below). The two axial grooves 12 of the valve core 10 rotate to the right. The right and lower axial groove 12 is configured to implement communication between the first valve port 101 and the eighth valve port 108. The right and upper axial groove 12 is configured to implement communication between the sixth valve port 106 and the seventh valve port 107.

It may be understood that, similar to the embodiment, shown in FIG. 35, in which the valve core 10 fits with the valve seat 20, the embodiment shown in FIG. 40 may be used to implement a connection structure of the liquid flow paths when the temperature control system 200 runs in the third heat exchange mode, the fourth heat exchange mode, and the fifth heat exchange mode.

It can be seen that the temperature control system 200 in this application controls, by using the actuator 207, the valve core 10 and the valve seat 20 to rotate relative to each other, so that angles of the axial groove 12 and the circumferential groove 13 can be changed, and a connection combination of openings 231 on the valve seat 20 is changed. The temperature control system 200 is configured with the openings 231 and the internal channels 23 in the valve seat 20, so that effect that the liquid flow paths communicate with different modules of the temperature control system 200 by using the multi-way valve 100 can be implemented. Because the axial groove 12 and the circumferential groove 13 always communicate with two adjacent openings 231, the actuator 207 only needs to rotate by a small angle, to switch different liquid flow paths in the temperature control system 200. The multi-way valve 100 in this application has a compact structure. This helps implement miniaturization of the temperature control system 200 and reduce a volume occupied by the temperature control system 200 in the energy storage system or the vehicle.

It is clear that a person skilled in the art can make various modifications and variations to this application without departing from the protection scope of this application. In this case, this application is intended to cover these modifications and variations of this application provided that they fall within the scope of the claims of this application and their equivalent technologies.

## Claims

1. A temperature control system, wherein the temperature control system comprises an actuator, a plurality of liquid flow paths, and a multi-way valve, the multi-way valve comprises a valve core and a valve seat, the valve core is cylindrical, the valve seat is sleeved on the valve core, an outer circumferential surface of the valve core is in contact with an inner circumferential surface of the valve seat, and the actuator is configured to drive the valve core to rotate around a rotation axis of the valve core in an inner hole of the valve seat;
the outer circumferential surface of the valve core comprises a plurality of axial grooves and a plurality of circumferential grooves, each axial groove extends along a direction of the rotation axis of the valve core, each circumferential groove extends along a circumferential direction of the valve core, and the plurality of axial grooves and the plurality of circumferential grooves are arranged at intervals; and
the inner circumferential surface of the valve seat comprises a plurality of openings, each opening is connected to at least one liquid flow path through an internal channel of the valve seat, the plurality of openings are arranged in an array form and at intervals along the direction of the rotation axis of the valve core and the circumferential direction of the valve core, and at least two adjacent openings communicate with each other through one axial groove or one circumferential groove.

2. The temperature control system according to claim 1, wherein the outer circumferential surface of the valve core comprises at least two axial grooves, the at least two axial grooves are sequentially arranged adjacent to each other along the circumferential direction of the valve core, and at least two adjacent openings communicate with each other through a same axial groove along the direction of the rotation axis of the valve core.

3. The temperature control system according to claim 2, wherein the plurality of openings are grouped into a plurality of columns of openings, each column of openings comprises at least two openings arranged adjacent to each other along the direction of the rotation axis of the valve core, the plurality of columns of openings are sequentially arranged adjacent to each other along the circumferential direction of the valve core, and at least two openings in each column of openings communicate with each other through a same axial groove.

4. The temperature control system according to claim 1, wherein the outer circumferential surface of the valve core comprises at least two circumferential grooves, the at least two circumferential grooves are sequentially arranged adjacent to each other along the direction of the rotation axis of the valve core, and at least two adjacent openings communicate with each other through a same circumferential groove along the circumferential direction of the valve core.

5. The temperature control system according to claim 4, wherein the plurality of openings are grouped into a plurality of layers of openings, each layer of openings comprises a plurality of openings arranged adjacent to each other along the circumferential direction of the valve core, the plurality of layers of openings are sequentially arranged adjacent to each other along the direction of the rotation axis of the valve core, and at least two openings that are in each layer of openings and that are arranged adjacent to each other communicate with each other through a same circumferential groove.

6. The temperature control system according to any one of claims 1 to 5, wherein the outer circumferential surface of the valve core comprises two circumferential grooves and at least two axial grooves; and
the two circumferential grooves are parallel and arranged adjacent to each other along the direction of the rotation axis of the valve core, and the at least two axial grooves are parallel and arranged adjacent to each other along the circumferential direction of the valve core, one end of each circumferential groove is adjacent to one axial groove, and the other end of each circumferential groove is adjacent to the other axial groove.

7. The temperature control system according to any one of claims 1 to 5, wherein the valve core comprises a central column, two cover plates, a plurality of vertical partition plates, and at least one horizontal partition plate, a length direction of the central column is parallel to the rotation axis of the valve core, and the two cover plates are fastened at intervals to the central column along the length direction of the central column;
the vertical partition plate is fastened between the two cover plates along a direction perpendicular to the cover plate, and two adjacent vertical partition plates are constructed to form one axial groove between the two cover plates; and
the horizontal partition plate is fastened to the central column along a direction parallel to the cover plate, the horizontal partition plate is located between the two cover plates and is separately spaced from the two cover plates, and the horizontal partition plate is constructed to form two circumferential grooves between the two cover plates.

8. The temperature control system according to claim 7, wherein the cover plate is a circle, the central column is a cylinder, and a center line of the central column coincides with the rotation axis of the valve core;
the vertical partition plate is a rectangle, and a sum of a radius of the central column and a length of a side that is of the vertical partition plate and that is connected to the cover plate is equal to a radius of the cover plate; and
the horizontal partition plate is a sector, and a sum of the radius of the central column and a sector radius of the horizontal partition plate is equal to the radius of the cover plate.

9. The temperature control system according to claim 7, wherein the valve core comprises several support plates, each support plate is connected between one cover plate and the horizontal partition plate, the support plate is configured to fasten relative positions of the cover plate and the horizontal partition plate, and the support plate is provided with a penetrated through hole, to enable the circumferential grooves to communicate with each other.

10. The temperature control system according to any one of claims 1 to 5, wherein the inner circumferential surface of the valve seat comprises eight openings;
the eight openings are arranged in two layers along the direction of the rotation axis of the valve core, and four openings in each layer of openings are arranged in alignment along the circumferential direction of the valve core; and
the eight openings are arranged in four columns along the circumferential direction of the valve core, and two openings in each column of openings are arranged in alignment along the direction of the rotation axis of the valve core.

11. The temperature control system according to claim 10, wherein the temperature control system comprises a radiator and a power pump; and
the power pump communicates with the radiator through at least one liquid flow path, the radiator communicates with the multi-way valve through at least one liquid flow path, and the power pump communicates with the multi-way valve through at least one liquid flow path.

12. The temperature control system according to claim 11, wherein the temperature control system comprises an evaporator, and the evaporator communicates with the multi-way valve through at least one liquid flow path.

13. An energy storage system, comprising a battery pack, a converter, and the temperature control system according to any one of claims 1 to 12, wherein
one liquid flow path exchanges heat with the battery pack, and another liquid flow path exchanges heat with the converter; and
the actuator is configured to control, based on a temperature of at least one of the battery pack or the converter, the multi-way valve to adjust a flow rate of at least one of the plurality of liquid flow paths.

14. A vehicle, comprising a motor, a battery pack, and the temperature control system according to any one of claims 1 to 12, wherein the battery pack is configured to supply power to the motor;
one liquid flow path exchanges heat with the battery pack, and another liquid flow path exchanges heat with the motor; and
the actuator is configured to control, based on a temperature of at least one of the battery pack or the motor, the multi-way valve to adjust a flow rate of at least one of the plurality of liquid flow paths.

15. A multi-way valve, comprising a valve core and a valve seat, wherein
the valve core is cylindrical, the valve seat is sleeved on the valve core, an outer circumferential surface of the valve core is in contact with an inner circumferential surface of the valve seat, and the valve core rotates around a rotation axis of the valve core in an inner hole of the valve seat;
the outer circumferential surface of the valve core comprises a plurality of axial grooves and a plurality of circumferential grooves, each axial groove extends along a direction of the rotation axis of the valve core, each circumferential groove extends along a circumferential direction of the valve core, and the plurality of axial grooves and the plurality of circumferential grooves are arranged at intervals; and
the inner circumferential surface of the valve seat comprises a plurality of openings, each opening is connected to at least one liquid flow path through an internal channel of the valve seat, the plurality of openings are arranged in an array form and at intervals along the direction of the rotation axis of the valve core and the circumferential direction of the valve core, and at least two adjacent openings communicate with each other through one axial groove or one circumferential groove.
